# EUROPEAN PATENT APPLICATION

(11) **EP 2 468 097 A1**
(43) Date of publication of application: **27.06.2012**
(21) Application number: 10196197.7
(22) Date of filing: 21.12.2010
(51) Int. Cl.: A01N 43/80, A01N 43/82, A01N 43/828, A01P 15/00

(54) **Use of Isothiazolecarboxamides to create latent host defenses in a plant**

(71) Applicant: Bayer CropScience AG, 40789 Monheim (DE)
(72) Inventor: The designation of the inventor has not yet been filed

(57) **Abstract**

The present invention relates to the novel use of Isotianil or Tiadinil for inducing latent host defenses in a plant. In particular, the present invention relates the use of Isotianil or Tiadinil for inducing latent host defenses that are activated in the event of an attack by a phytopathogenic pathogen or pest or of abiotic stress. The invention further relates to the induction of latent host defenses in a plant which comprises the priming of the intrinsic disease resistance mechanisms of a plant.

## Description

The present invention relates to the novel use of an isothiazolecarboxamide of the formula (I) 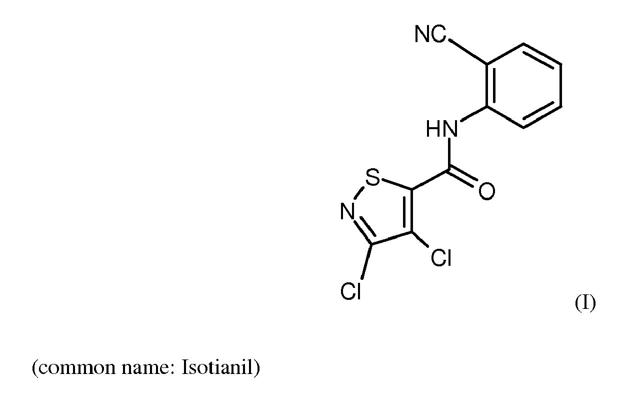 or a thiadiazolecarboxamide of the formula (II) 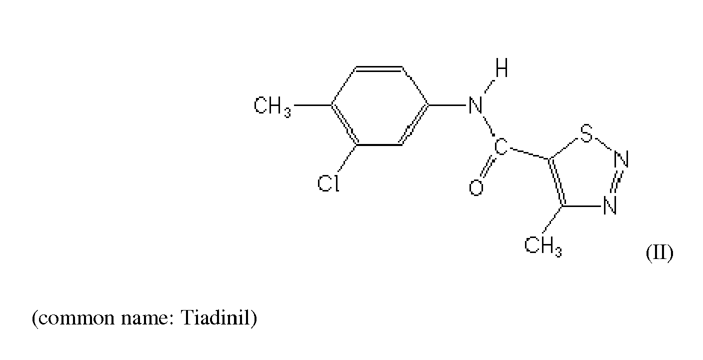 for inducing latent host defenses in a plant.

According to a further embodiment the present invention relates to the above mentioned use of the compound of formula (I) or (II), wherein the latent host defenses in a plant are activated in the event of an attack by a phytopathogenic pathogen or pest.

The present invention further relates to the above mentioned use of the compound of formula (I) or (II), wherein the latent host defenses in a plant are activated in the event of abiotic stress.

According to a further embodiment, the present application relates to the above mentioned use of the compound of formula (I) or (II), wherein the abiotic stress is induced by high to low zinc deficiency.

Moreover, the invention relates to the above mentioned use of the compound of formula (I) or (II), wherein the inducing of latent host defenses in a plant comprises the priming of the intrinsic disease resistance mechanisms of a plant. As synonym for "intrinsic disease resistance mechanisms of a plant", the term "plant immune response" can also be used.

In the natural environment, defense reactions of plants are induced by various factors e.g. microorganisms, ectoparasites, or abiotic stresses like wind or heat. Numerous species of bacteria, fungi, pathogen-derived molecules, cell-wall components of fungi, peptides or plant extracts are commercialized as biological or natural control agents for crop diseases. Some of them (B. W. M. Verhagen et al., in Mol Plant Microbe Interact. (2004), vol. 17, pp. 895-908; H. Takahashi et al., in Phytopathology. (2006), vol. 96, pp. 908-916) were proved to induce systemic acquired resistance (SAR) in plants, similar to the synthetic chemical inducers. The present invention relates to synthetic chemicals defined as host plant defense inducers by FRAC classification (FRAC website http://www/frac.info/), in particular to the subgroup P3 including Isotianil and Tiadinil. Host plant defense inducers as defined by FRAC classification are practically well established as major countermeasures for specific diseases in particular rice blast in Northeast Asia.

It is assumed that all plants have the intrinsic capacity to defend themselves against pathogen attacks. Plants can be induced to deploy enhanced defenses and this can be triggered by various stimuli such as biotic and abiotic stress, beneficial micro-organisms and chemicals. Induced resistance is often a systemic response with long lasting effects that confers a broad spectrum of resistance. It is regulated by a network of signaling pathways which involve endogenous phytohormones: salicylic acid (SA), jasmonic acid (JA) (figure 1) and ethylene.

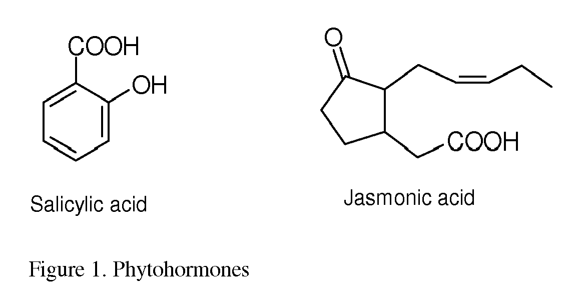

According to the inducing agent and the subsequent molecular mechanism, two major types of induced resistance are differentiated: SAR and Induced Systemic Resistance (ISR). SAR is induced by a limited primary infection by a necrotizing pathogen. ISR is induced by non pathogenic organisms that colonize roots. SAR depends on SA, while ISR requires jasmonic acid and ethylene, but not SA. Both, SAR and ISR, confer an enhanced defense capacity. Upon pathogen attack, defence response occurs earlier and is stronger, leading to a broader resistance spectrum (Hammerschmidt, R. Advances in Botanical Research 2009, 51, 173-222). It is admitted that SAR is most efficient against biotrophic and hemibiotrophic pathogens and leads to the expression of *Pathogenesis Related (PR)* genes (L. C. van Loon, M. Rep, C. M. J. Pieterse, in Annu Rev Phytopathol. (2006), vol. 44, pp. 135-162), whereas necrotrophic pathogens (pathogens that obtain their nutrients from dead cells and tissues of its host organism) are usually controlled by ISR. As previously mentioned, chemicals can also induce resistance. The compounds used in the present invention are SAR inducers.

Transcription factors differentially regulate a number of genes involved in defense ultimately leading to the production of defense proteins. The first proteins associated with SAR that were discovered are PR proteins. They are classified in 17 families. Many are extra-cellular and have an antimicrobial activity, supporting the idea of a "direct" role in defense. Induction of *PR* genes is part of the defense response, activation of additional defenses is necessary to stop pathogen development. A complex array of antimicrobial processes is activated that includes strengthening of plant cell wall by callose and hydroxyproline-rich glycoproteins depositions and, accumulation of peroxides (SAR biochemical changes).

Despite the fact that SAR has been extensively studied in various species, the identity of the systemic signal that triggers the defense response is still unknown. In dicots such as Arabidopsis and tobacco, the onset of SAR is associated with accumulation of SA (C. Garcion, J.-P. Métraux, in Annual Plant Reviews. (2006), vol. 24, pp. 229-255). Exogenous application of SA, or functional analogs, induces SAR. Nevertheless studies involving transgenic plants with reduced level of SA suggested that SA is not the mobile signal but is rather required in distant tissues for the establishment of SAR (J. E. Parker, in Science Signaling. (2009), vol. 2, pp. 1-3). Other putative candidates have been proposed such as Methyl Salicylate (MeSA), lipid derived signals including JA and more recently azelaic acid (S.-W. Park, E. Kaimoyo, D. Kumar, S. Mosher, D. F. Klessig, in Science. (2007), vol. 318, pp. 113-116; L. Katsir, H. S. Chung, A. J. K. Koo, G. A. Howe, in Curr Opin Plant Biol. (2008), vol. 11, pp. 428-435; H. W. Jung, T. J. Tschaplinski, L. Wang, J. Glazebrook, J. T. Greenberg, in Science. (2009), vol. 324, pp. 89-91).

In rice, in contrast to dicots and other monocots, the role of SA in SAR remains unclear. Rice contains already high levels of SA and no further accumulation is observed with disease resistance (P. Silverman et al., in Plant Physiol. (1995), vol. 108, pp. 633-639). In addition, depletion of endogenous SA in transgenic rice does not measurably effect defense gene expression (Y. Yang, M. Qi, C. Mei, in Plant J. (2004), vol. 40, pp. 909-919).

Analysis of an Arabidopsis mutant non-responsive to SA led to the discovery of a key regulator of SAR, called *NPR1* (Non-Expressor of Pathogenesis Related genes). *NPR1* is essential for transducing the SA signal and to activate *PR* gene expression (X. Dong, in Curr. Opin. Plant Biol. (2004), vol. 7, pp. 547-552; M. Grant, C. Lamb, in Curr. Opin. Plant Biol. (2006), vol. 9, pp. 414-420). Upon cellular redox changes induced by SA, *NPR1* migrates from the cytoplasm to the nucleus. There, it interacts with a *BZIP* transcription factor and activates defense genes (Z. Mou, W. Fan, X. Dong, in Cell. (2003), vol. 113, pp. 935-944). In addition, SA, as well as pathogen infection, also leads to the enhanced expression of *NPR1* gene (H. Cao, J. Glazebrook, J. D. Clarke, S. Volko, X. Dong, in Cell. (1997), vol. 88, pp. 57-63; J. Ryals et al., in Plant Cell. (1997), vol. 9, pp. 425-439). Recently, a global transcriptional approach was used to identify genes involved in the very early responses to SA (F. Blanco et al., in Plant Mol Biol. (2009), vol. 70, pp. 79-102).

In rice, the monocot model to investigate the molecular mechanisms of induced resistance, a SA *NPR1*-dependent signaling pathway has also been characterized (M. S. Chern et al., in Plant J. (2001), vol. 27, pp. 101-113; M. Chern, H. A. Fitzgerald, P. E. Canlas, D. A. Navarre, P. C. Ronald, in Mol Plant Microbe Interact. (2005), vol. 18, pp. 511-520). This suggests that at least some defense signaling components are conserved between dicots and monocots. Furthermore, over-expression of the Arabidopsis *NPR1* gene in rice (J. Quilis, G. Peñas, J. Messeguer, C. Brugidou, B. S. Segundo, in Mol Plant Microbe Interact. (2008), vol. 21, pp. 1215-1231) results in enhanced resistance against bacterial and fungal pathogens, as it does in Arabidopsis (H. Cao, X. Li, X. Dong, in Proc Natl Acad Sci U S A. (1998), vol. 95, pp. 6531-6536), tomato (W. C. Lin et al., in Transgenic Res. (2004), vol. 13, pp. 567-581) and wheat (R. Makandar, J. S. Essig, M. A. Schapaugh, H. N. Trick, J. Shah, in Mol Plant Microbe Interact. (2006), vol. 19, pp. 123-129). In rice, the transcription factor *OsWRKY45* plays an essential role in induced resistance (M. Shimono et al., in The Plant Cell. (American Society of Plant Biologists, 2007), vol. 19, pp. pp. 2064-2076; H. Takatsuji, C.-J. Jiang, S. Sugano, in JARQ. (2010), vol. 44, pp. 217-223). This pathway is independent of NPR1 but participates actively to blast resistance as shown by knockdown experiments. No counterpart of *OsWRKY45* has yet been found in Arabidopsis, but its over-expression in Arabidopsis increases resistance to bacterial pathogen (Y. Qiu, D. Yu, in Environ. Exp. Bot. (2009), vol. 65, pp. 35-47).

In SAR expressing plants, defense is more rapid and/or efficient upon pathogen challenge. This phenomenon, known as priming, exists not only for SAR but also for other forms of induced resistance (U. Conrath et al., in Mol.Plant Microbe Interact. (2006), vol. 19, pp. 1062-1071). Investigation on priming effect in parsley cells shows that chemicals or elicitors at low doses do not induce directly expression of phenylalanine ammonia-lysae (PAL) defense related gene. However in these cells, PAL gene is more robustly expressed after a challenge (U. Conrath, C. M. J. Pieterse, B. Mauch-Mani, in Trends Plant Sci. (2002), vol. 7, pp. 210-216). Similarly in intact plants, low level of SA primed the plant for a potentiated expression of *PR1* and *PAL* genes, which becomes only visible after pathogen attack. In addition, it was shown that *NPR1* is essential for priming in Arabidopsis (A. Kohler, S. Schwindling, U. Conrath, in Plant Physiol. (2002), vol. 128, pp. 1046-1056).

Nevertheless, the exact molecular mechanisms of priming are not clearly understood. Enhancement of signaling pathway, accumulation of post-translational modifications and of crucial transcription factors could be important for the priming effect (K. Goellner, U. Conrath, in Eur. J. Plant Pathol. (2008), vol. 121, pp. 233-242). Indeed accumulation of two mitogen-activated protein kinases MAPK3 and MAPK6, involved in signaling, was recently reported in primed Arabidopsis plants (G. J. M. Beckers et al., in Plant Cell. (2009), vol. 21, pp. 944-953).

Probenazole (figure 2) was the first synthetic chemical host plant defense inducer introduced on the market to control fungal blast disease and bacterial blight in rice.

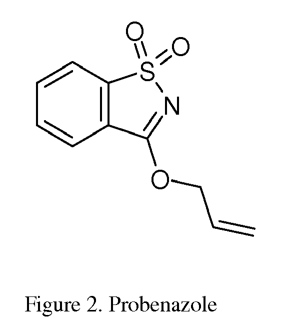

In rice, induction of *PR* genes, for instance *PBZ1* and *OsPR1a*, has been reported upon Probenazole treatment (T. Iwai, S. Seo, 1. Mitsuhara, Y. Ohashi, in Plant Cell Physiol. (2007), vol. 48, pp. 915-924). *PBZ1* (for Probenazole inducible), a *PR10 related* gene, was discovered first by screening genes responding to Probenazole. It represents a useful marker for SAR in rice. Besides PR genes, other genes involved in signal transduction pathways such as kinase and the *RPR1* (Rice Probenazole Responsive) gene coding for a disease resistant like protein are also activated and upon infection, enhanced activity in the phenylpropanoid metabolism is also observed (M. Iwata, in Pesticide Outlook. (2001), vol. 12, pp. 28-31).

In dicots it is believed that Probenazole induces defense responses through the SA signaling pathway (K. Yoshioka, H. Nakashita, D. F. Klessig, 1. Yamaguchi, in Plant J. (2001), vol. 25, pp. 149-157; K. Umemura et al., in Plant J. (2009), vol. 57, pp. 463-472). It was shown that level of total SA (free SA and salicylic acid glucoside, SAG) is significantly increased by Probenazole treatment. Moreover, Probenazole and its active metabolite, BIT, require SA accumulation to induce SAR in Arabidopsis and tobacco, as well as a functional *NPR1* gene (K. Yoshioka, H. Nakashita, D. F. Klessig, I. Yamaguchi, in Plant J. (2001), vol. 25, pp. 149-157; H. Nakashita et al., in Physiol. Mol. Plant Pathol. (2002), vol. 61, pp. 197-203). Indeed, both compounds are ineffective in NahG transgenic plants that are unable to accumulate SAR. In addition those compounds do not involve JA and ethylene pathways. Thus Probenazole is believed to act upstream SA unlike acibenzolar-S-methyl and Tiadinil (see below).

On the contrary, in rice, SAR is independent of SA accumulation and the exact role of SA remains unclear. Nevertheless, it was reported SA accumulation in adult rice plants upon Probenazole treatment (T. Iwai, S. Seo, 1. Mitsuhara, Y. Ohashi, in Plant Cell Physiol. (2007), vol. 48, pp. 915-924). Moreover, other authors recently reported that a salicylic acid glucosyltransferase, *OsSGT1,* which converts free SA to the glycoside form, could contribute actively to Probenazole induced resistance (K. Umemura et al., in Plant J. (2009), vol. 57, pp. 463-472). They found that Probenazole induces a SAG accumulation that is correlated with the activation of *OsSGT1* gene. Furthermore, *OsSGT1* knockdown mutant show impaired capacity to develop Probenazole induced resistance against blast disease.

Acibenzolar-S-methyl (ASM) (Figure 3) induces a broad resistance spectrum on an extended diversity of dicots and monocots. In clear contrast to other chemical host defense inducers, ASM is not mainly used in rice but more in dicot crops.

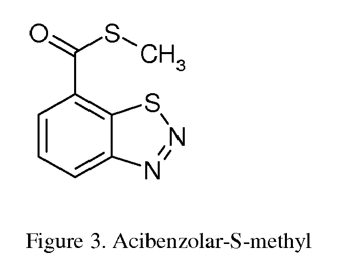

It was recently reported that transformation of ASM by methyl esterase (SABP2) is required to induce a full SAR response (D. Tripathi, Y.-L. Jiang, D. Kumar, in FEBS Lett. vol. 584, pp. 3458-3463). At the molecular level, ASM induces the same characteristic set of SAR genes as does biological or SA induction (Friedrich et al. 1996). ASM directly activates *PR-1* gene, primes the plants for stronger *PAL* gene induction and improves callose deposition (A. Kohler, S. Schwindling, U. Conrath, in Plant Physiol. (2002), vol. 128, pp. 1046-1056). Different studies on rice reported that ASM induces divers components of the defense signalling cascade such as *OsBIMK2* coding for a MAP kinase (F. Song, R. M. Goodman, in Planta. (2002), vol. 215, pp. 997-1005), *OsBIANK1* encoding a plasma membrane anchored protein (X. Zhang et al., in Mol Biol Rep. (2010), vol. 37, pp. 653-660), *OsBISERK1* encoding a protein belonging to Somatic Embryogenesis Receptor Kinase (SERK) (D. Song, G. Li, F. Song, Z. Zheng, in Mol Biol Rep. (2008), vol. 35, pp. 275-283). In dicots, ASM induces SAR without accumulation of SA (L. Friedrich et al., in Plant J. (1996), vol. 10, pp. 61-70). Moreover, its action does not require SA accumulation since ASM induces SAR in transgenic NahG plants. However ASM necessitates functional *NPR1* gene as SA does (K. A. Lawton et al., in Plant J. (2006), vol. 10, pp. 71-82). This is further confirmed by transcriptional profiling, which showed that almost all ASM-responsive genes are NPR1 dependent (D. Wang, N. Amornsiripanitch, X. Dong, in PLoS Pathog. (2006), vol. 2, pp. e123). Therefore, ASM is considered as a functional analogue of SA and suggest that it could act at the same site.

In rice, induced resistance by ASM requires the two transcriptional regulators, *NPR1* and the rice-specific *OsWRY45* (H. Takatsuji, C.-J. Jiang, S. Sugano, in JARQ. (2010), vol. 44, pp. 217-223). Contrary to *Arabidopsis,* it was shown that only a subset of ASM-responsive genes is *OsNPR1-dependent* in rice (S. Sugano *et al.,* in *To be published in Plant Mol Biol*). While all of ASM up regulated genes, categorized under defense response, are *NPR1*-dependent in *Arabidopsis,* only 5.9% of them are *OsNPR1*-dependent in rice. Expression of *PR1a* and *PR1*b is controlled by *OsNPR1* whereas glutathione-S-transferase (GST) and cytochrome P450 genes are regulated by *OsWRK45*. Thus, ASM induced resistance in rice would depend on two complementary pathways, *NPR1* and *OsWRKY45,* the latest being crucial for blast resistance, induced not only by ASM but also by Tiadinil and Probenazole.

Tiadinil was developed to control rice fungal blast and bacterial diseases. Tiadinil treatment in rice induces the expression of *PR* genes such as *PBZ1* and leads to callose deposition upon infection (T. Hirooka, K. Umetani, in Agrochem Jpn. (2004), vol. 85, pp. 12-15). The mode of action of Tiadinil and of its active metabolite (SV-03) has been mostly studied in tobacco and Arabidopsis. There, both compounds induce resistance to a broad spectrum of pathogens as well as expression of SAR marker genes (M. Yasuda, in J. Pestic. Sci. (Tokyo, Jpn.). (2007), vol. 32, pp. 281-282). Like ASM, Tiadinil and SV-03 are able to induce resistance in NahG plants but require a functional *NPR1* (4 M. Yasuda, in J. Pestic. Sci. (Tokyo, Jpn.). (2007), vol. 32, pp. 281-2827). Using JA-insensitive and ethylene-insensitive mutants, it was also shown that these compounds act independently of the JA and ethylene pathways. Therefore, Tiadinil and SV-03 induce plant defense responses via the SA signaling pathway, at a site between SA and *NPR1.*

Isotianil is a new plant defense inducer that controls for example leaf blast and bacterial leaf blight in rice. Isotianil does not exhibit by itself an activity against pathogens but protects plants against infection when applied at an early developmental stage. Therefore it is readily accepted in above countries where prophylactic rice blast control methods e.g. nursery box application, water surface application, seed treatment, etc. are well established by melanin biosynthesis inhibitors and Probenazole. Although its practical use is so far limited in rice, Isotianil demonstrates broader control spectrum as a host defense inducer in various plants. The disease control spectrum is basically similar to Probenazole and Tiadinil, which covers typical biotrophic pathogens like Pyricularia, powdery mildews, Xanthomonas and some leaf spot diseases but generally negative for necrotrophic pathogens.

According to a study by Meiji Seika Kaisha, Ltd, (http://www.meiji.co.jp/ agriculture/lecture/ pdf/activator_12.pdf), many gene expressions were changed by resistance inducers, 150 hours after treatment, without inoculation: 2.1% (1.7%) by Probenazole, 1.8% (0.9%) by Tiadinil and 1.8% (0.9%) by Isotianil of genes were activated (deactivated). No data were shown in this study for time points earlier than 150 hours after treatment.

As outlined above, both Isotianil and Tiadinil are known as host defense inducers. Surprisingly, it has now been found that Isotianil and Tiadinil induce latent host defenses.

The term "latent host defenses" according to the present invention signifies that the compounds used according to the invention prime the intrinsic disease resistance mechanisms of a plant. Surprisingly, it has now been found that only a few genes are activated when a plant is treated with Isotianil or Tiadinil when no inoculation with a phytopathogenic pathogen or pest or by abiotic stress follows the treatment (data shown in Example A, Table 2). Preferred genes activated by treatment with Isotianil (without inoculation, measured 4 days post treatment, dpt) are a *NPR1* homolog gene, called *NPR3* (or *NH3),* induced 6-fold over control, *OsWRKY62, OsWRKY76* with a fold change of 18 and 6.5 respectively, *OsSGT1* coding for a SA glucosyltransferase, 13.4 fold induction, and *OsBMST1* coding for a salicylate methyltransferase, 7.1 fold induction. Further preferred are genes coding for Jacalin (25.9 fold induction) and Terpene synthase/cyclase family protein (26.8 and 47.1 fold induction) (Table 2).

Examples for genes specifically induced by Probenazole, (4 days post treatment, without inoculation) that are not induced by Isotianil are shown in Table 1:

**Table 1. Genes specifically induced by PBZ, 4 days post-treatment (without inoculation)**

| **Row** | **TIGR5 ID name** | **First_and_Secound_Annotation_Blas t hit O sativa TIGR V5** | **New Description 080815** |
|---|---|---|---|
| Os.28011.1. S1_at | LOC_Os06g29 730.1 | expressed protein | BROWN PLANTHOPPER-INDUCIBLE PROTEIN-LIKE. |
| Os.6037.1. S1_at | LOC_Os09g27 580.1 | potassium transporter, putative, expressed | POTASSIUM TRANSPORTER 7 (OSHAK7). |
| Os.17887.1. S1_at | LOC_Os12g36 910.1 | calmodulin binding protein, putative, expressed | CALMODULIN-BINDING PROTEIN. |
| Os.52344.1. S1_at | LOC_Os08g26 840.1 | expressed protein | PENTATRICOPEPTIDE (PPR) REPEAT-CONTAINING PROTEIN-LIKE. |
| OsAffx.219 64.1.S1_at | | not identified | P0035H10.4 PROTEIN. |
| OsAffx.290 0.1.S1_at | LOC_Os02g37 700.1 | lecithine cholesterol acyltransferase-like protein, putative, expressed: | 1-O-ACYLCERAMIDE SYNTHASE PRECURSOR (EC 2.3.1.-) (ACS) (LYSOSOMAL PHOSPHOLIPASE A2) (LYSOPHOSPHOLIPASE 3) (LCAT-LIKE LYSOPHOSPHOLIPASE) (LLPL). |

The priming causes a plant to activate its intrinsic disease resistance mechanisms, including the intrinsic defense mechanisms against abiotic stress, in a stronger and faster way upon an attack by a phytopathogenic pathogen or pest or abiotic stress and ensures that the intrinsic disease resistance mechanisms are activated in time for protection. The use of the compounds of formula (I) or (II) according to the invention effectively creates an early warning system so the plant produces naturally occurring disease resistance mechanisms in time to avoid that infections can get a head start.

According to a preferred embodiment of the invention, the priming of the intrinsic disease resistance mechanisms of a plant by treatment of the plant with a compound of formula (I) or (II) is observed for at least 4 days, preferably at least 5 days, more preferably at least 6 days, also preferably for at least 7, 8, 9, 10, 11, 12, 13, 14, or 15 days after treatment with the compound of formula (I) or (II). According to a further embodiment of the invention, the priming of the intrinsic disease resistance mechanisms of a plant by treatment of the plant with a compound of formula (I) or (II) is observed for at least 20, 30, 40, 50, 60, 70, 80, 90, 100, 110, 120, 130, 140 or 150 days after treatment with the compound of formula (I) or (II). This means that at the indicated times after treatment with the compound of formula (I) or (II), the induction of the expression of plant defense genes is stronger and faster in the event of an attack by a phytopathogenic pathogen or pest or of abiotic stress, as compared to control or other plant defense inducers.

According to the present invention, the most relevant plant defense genes include (see also Example C, Table 6, expression pattern of defense genes during infection in control plants and in plants pre-treated with Isotianil or Probenazole):

| | |
|---|---|
| LOC_Os03g46440.1: | NPR1 homolog |
| LOC_Os05g25770.1: | OsWRKY45 |
| LOC_Os09g25070.1: | OsWRKY62 |
| LOC_Os09g25060.1: | OsWRKY76 |
| LOC_Os09g34230.1: | SA : OsSGT1 |
| LOC_Os09g34250.1: | SA : OsSGT1 |

According to yet another embodiment of the present invention, the intrinsic disease resistance mechanisms of a plant are primed by treatment of the plant with a compound of formula (I) or (II) for more than one time, such as 2 times, 3 times, 4 times, 5 times or 6 times. The time interval between two treatments can be chosen according to the agronomical needs.

The term "priming of the intrinsic disease resistance mechanisms of a plant" within the meaning of the present invention signifies that the compounds of formula (I) or (II) used in the present invention induce only few changes in gene expression in the absence of pathogen pressure (see Example A, Table 2, and above). These genes directly responsive to the compounds of formula (I) or (II) are involved in salicylic acid catabolism and pathway. In the event of an attack by a phytopathogenic pathogen or pest or of abiotic stress, the compounds of formula (I) or (II) prime plants, in particular rice plants, for stronger and faster induction of defense genes as compared to control (simple infection) and also as compared to other plant defense inducers such as Probenazole (PBZ). The onset of resistance is accompanied by a potentiated SAR response including enhanced expression of transcription factors such as NPR1 homolog and WRKY and of proteins of SA catabolism such as SGT1.

The disease resistance mechanisms are only activated in the event of an attack by a phytopathogenic pathogen or pest or abiotic stress. This means that the use of the compounds according to the present invention plant does not cause a plant to waste energy in useless defensive processes in a non-attack situation.

The invention thus further relates to the above mentioned use of the compound of formula (I) or (II), wherein the inducing of latent host defenses in a plant maintains the strong growth and vitality of the plant.

The term "maintaining strong growth and vitality of the plant" within the meaning of the present invention signifies that the treatment of plants with the compounds of formula (I) or (II), in the absence of an attack by a phytopathogenic pathogen or pest, does not impair the growth or vitality of the plant, as characterized for example by production yield, or leaf sizes or weight. Further examples related to growth or vitality of a plant are emergence, crop yields, more developed root system, tillering increase, increase in plant height, bigger leaf blade, less dead basal leaves, stronger tillers, greener leaf color, less fertilizers needed, less seeds needed, more productive tillers, earlier flowering, early grain maturity, less plant verse (lodging), increased shoot growth, improved plant vigor, and early germination; or any other features familiar to a person skilled in the art. "Maintaining strong growth and vitality of the plant" can further be described with the terms health promoting, plant health care support, or invigorating.

According to yet another embodiment, the invention relates to the above mentioned use of the compound of formula (I) or (II), wherein the inducing of latent host defenses in a plant results in a stronger and faster induction of the expression of plant defense genes in the event of an attack by a phytopathogenic pathogen or pest or of abiotic stress, as compared to control or other plant defense inducers. According to a preferred embodiment, the invention relates to the above mentioned use of the compound of formula (I) or (II), wherein the inducing of latent host defenses in a plant results in a stronger and faster induction of the expression of plant defense genes in the event of an attack by a phytopathogenic pathogen or pest, as compared to control or other plant defense inducers.

Within the meaning of the invention, the term "control" signifies plants that are inoculated with the same pathogen or the same abiotic stress factor(s) as the plants treated with the compounds of formula (I) or (II) but without prior treatment with a compound of formula (I) or (II). This is also called "mock treatment".

In a further embodiment of the present invention the above mentioned use of the compound of formula (I) or (II) is characterized in that the plant defense genes induced in the event of an attack by a phytopathogenic pathogen or pest or of abiotic stress are expressed at least two fold stronger as compared to control. In a preferred embodiment of the present invention the above mentioned use of the compound of formula (I) or (II) is characterized in that the plant defense genes induced in the event of an attack by a phytopathogenic pathogen or pest are expressed at least two fold stronger as compared to control.

According to another embodiment of the present invention, the at least two fold stronger expression of plant defense genes induced in the event of an attack by a phytopathogenic pathogen or pest can be observed 24 or 48 hours, preferably 24 hours, after an attack by a phytopathogenic pathogen or pest. According to another embodiment of the present invention, the at least two fold stronger expression of plant defense genes induced in the event of an attack by a phytopathogenic pathogen or pest can be observed 48 hours after an attack by a phytopathogenic pathogen or pest.

The term "stronger and faster induction of the expression of plant defense genes as compared to control or other plant defense inducers" within the meaning of the present invention signifies that the degree of induction of the expression of plant defense genes is higher and that the induction occurs at an earlier time point as compared to control or other plant defense inducers.

A higher degree of induction of expression is defined as an at least two-fold, preferably an at least 3-fold, 4-fold, 5-fold, 6-fold, 7-fold, 8-fold, 9-fold, 10-fold, 12-fold, or 15-fold up regulation of plant defense genes.

The induction of the expression of plant defense genes at an earlier time point is defined as an at least 2-fold induction of the expression of plant defense genes that can be observed 24 or 48 hours after an attack by a phytopathogenic pathogen or pest, preferably 24 hours after an attack by a phytopathogenic pathogen or pest, also preferably 48 hours after an attack by a phytopathogenic pathogen or pest. According to a further embodiment of the present invention, the at least two fold stronger expression of plant defense genes induced in the event of an attack by a phytopathogenic pathogen or pest can be observed 72 or 96 hours after an attack by a phytopathogenic pathogen or pest. According to a further embodiment of the present invention, the at least two fold stronger expression of plant defense genes induced in the event of an attack by a phytopathogenic pathogen or pest can be observed at least twice as fast as compared to control or other host defense inducers such as probenazole.

The invention also relates to the above mentioned use of the compound of formula (I) or (II), wherein the plant defense genes induced in the event of an attack by a phytopathogenic pathogen or pest or of abiotic stress comprise genes of the SAR responses including enhanced expression of transcription factors such as NPR1 homolog and WRKY and of proteins of SA catabolism such as SGT1. According to a preferred embodiment, the invention relates to the above mentioned use of the compound of formula (I) or (II), wherein the plant defense genes induced in the event of an attack by a phytopathogenic pathogen or pest comprise genes of the SAR responses including enhanced expression of transcription factors such as NPR1 homolog and WRKY and of proteins of SA catabolism such as SGT1.

The term "attack by a phytopathogenic pathogen or pest" according to the present invention signifies the attack or infestation of a plant with phytopathogenic fungi, bacteria, viruses, viroids, mycoplasma-like organisms, protozoa, insects, acari or nematodes.

Some pathogens of fungal diseases which can be treated according to the invention may be mentioned by way of example, but not by way of limitation:

Diseases caused by powdery mildew pathogens, such as, for example, Blumeria species, such as, for example, Blumeria graminis; Podosphaera species, such as, for example, Podosphaera leucotricha; Sphaerotheca species, such as, for example, Sphaerotheca fuliginea; Uncinula species, such as, for example, Uncinula necator;

Diseases caused by rust disease pathogens, such as, for example, Gymnosporangium species, such as, for example, Gymnosporangium sabinae; Hemileia species, such as, for example, Hemileia vastatrix; Phakopsora species, such as, for example, Phakopsora pachyrhizi and Phakopsora meibomiae; Puccinia species, such as, for example, Puccinia recondita or Puccinia triticina; Uromyces species, such as, for example, Uromyces appendiculatus;

Diseases caused by pathogens from the group of the Oomycetes, such as, for example, Bremia species, such as, for example, Bremia lactucae; Peronospora species, such as, for example, Peronospora pisi or P. brassicae; Phytophthora species, such as, for example Phytophthora infestans; Plasmopara species, such as, for example, Plasmopara viticola; Pseudoperonospora species, such as, for example, Pseudoperonospora humuli or Pseudoperonospora cubensis; Pythium species, such as, for example, Pythium ultimum;

Leaf blotch diseases and leaf wilt diseases caused, for example, by Alternaria species, such as, for example, Alternaria solani; Cercospora species, such as, for example, Cercospora beticola; Cladiosporium species, such as, for example, Cladiosporium cucumerinum; Cochliobolus species, such as, for example, Cochliobolus sativus (conidia form: Drechslera, Syn: Helminthosporium); Colletotrichum species, such as, for example, Colletotrichum lindemuthanium; Cycloconium species, such as, for example, Cycloconium oleaginum; Diaporthe species, such as, for example, Diaporthe citri; Elsinoe species, such as, for example, Elsinoe fawcettii; Gloeosporium species, such as, for example, Gloeosporium laeticolor; Glomerella species, such as, for example, Glomerella cingulata; Guignardia species, such as, for example, Guignardia bidwelli; Leptosphaeria species, such as, for example, Leptosphaeria maculans; Magnaporthe species, such as, for example, Magnaporthe grisea; Microdochium species, such as, for example, Microdochium nivale; Mycosphaerella species, such as, for example, Mycosphaerella graminicola and M. fijiensis; Phaeosphaeria species, such as, for example, Phaeosphaeria nodorum; Pyrenophora species, such as, for example, Pyrenophora teres; Ramularia species, such as, for example, Ramularia collo-cygni; Rhynchosporium species, such as, for example, Rhynchosporium secalis; Septoria species, such as, for example, Septoria apii; Typhula species, such as, for example, Typhula incarnata; Venturia species, such as, for example, Venturia inaequalis;

Root and stem diseases caused, for example, by Corticium species, such as, for example, Corticium graminearum; Fusarium species, such as, for example, Fusarium oxysporum; Gaeumannomyces species, such as, for example, Gaeumannomyces graminis; Rhizoctonia species, such as, for example Rhizoctonia solani; Tapesia species, such as, for example, Tapesia acuformis; Thielaviopsis species, such as, for example, Thielaviopsis basicola;

Ear and panicle diseases (including maize cobs) caused, for example, by Alternaria species, such as, for example, Alternaria spp.; Aspergillus species, such as, for example, Aspergillus flavus; Cladosporium species, such as, for example, Cladosporium cladosporioides; Claviceps species, such as, for example, Claviceps purpurea; Fusarium species, such as, for example, Fusarium culmorum; Gibberella species, such as, for example, Gibberella zeae; Monographella species, such as, for example, Monographella nivalis; Septoria species, such as for example, Septoria nodorum;

Diseases caused by smut fungi, such as, for example, Sphacelotheca species, such as, for example, Sphacelotheca reiliana; Tilletia species, such as, for example, Tilletia caries; T. controversa; Urocystis species, such as, for example, Urocystis occulta; Ustilago species, such as, for example, Ustilago nuda; U. nuda tritici;

Seed- and soil-borne rot and wilt diseases, and also diseases of seedlings, caused, for example, by Fusarium species, such as, for example, Fusarium culmorum; Microdochium species, such as, for example, Microdochium nivale; Tilletia species, such as, for example, Tilletia caries; Ustilago species, such as, for example, Ustilago tritici, Utilago nuda; Pyrenophora species, such as, for example, Pyrenophora graminea, Prenophora teres; Phytophthora species, such as, for example, Phytophthora cactorum; Pythium species, such as, for example, Pythium ultimum; Rhizoctonia species, such as, for example, Rhizoctonia solani; Sclerotium species, such as, for example, Sclerotium rolfsii; Alternaria species, such as, for example, Alternaria brassicae; Phoma species, such as, for example, Phoma lingam.
Diseases of flowers and seeds caused, for example, by Botrytis species, such as, for example, Botrytis cinerea;
Diseases of plant tubers caused, for example, by Rhizoctonia species, such as, for example, Rhizoctonia solani; Helminthosporium species, such as, for example, Helminthosporium solani;
Diseases caused by bacteriopathogens, such as, for example, Xanthomonas species, such as, for example, Xanthomonas campestris pv. oryzae; Pseudomonas species, such as, for example, Pseudomonas syringae pv. lachrymans; Erwinia species, such as, for example, Erwinia amylovora.

Preference is given to controlling the following:
Seed- and soil-borne rot and wilt diseases, and also diseases of seedlings, caused, for example, by Fusarium species, such as, for example, Fusarium culmorum; Microdochium species, such as, for example, Microdochium nivale; Tilletia species, such as, for example, Tilletia caries; Ustilago species, such as, for example, Ustilago tritici, Ustilago nuda; Pyrenophora species, such as, for example, Pyrenophora graminea, Pyrenophora teres; Phytophthora species, such as, for example, Phytophthora cactorum; Pythium species, such as, for example, Pythium ultimum; Rhizoctonia species, such as, for example, Rhizoctonia solani; Sclerotium species, such as, for example, Sclerotium rolfsii; Alternaria species, such as, for example, Alternaria brassicae; Phoma species, such as, for example, Phoma lingam.

It is also possible to control resistant strains of the organisms mentioned above.

Preferably, the term "attack by a phytopathogenic pathogen or pest" signifies the attack or infestation of a plant with phytopathogenic fungi, bacteria, or insects. More preferably, the pathogens attacking a plant are selected from the group consisting of the rice pathogens *Pyricularia grisea* causing rice blast and *Xanthomonas oryzae* causing bacterial leaf blight, the banana pathogen *Mycosphaerella fijiensis* causing Black Sigatoka, the wheat pathogen *Blumeria graminis* f.sp tritici causing powdery mildew, the cucumber pathogens *Colletotrichum orbiculare* causing anthracnose and *Pseudomonas syringae* pv. *lachlymans* causing bacterial leaf spot, the pumpkin pathogen *Sphaerotheca fuliginea* causing powdery mildew, the strawberry pathogens *Glomerella cingulata* causing anthracnose, and *Sphaerotheca aphanis* causing powdery mildew, the eggplant pathogen *Sphaerotheca fuliginea* causing powdery mildew, the tomato pathogens *Oidiopsis sicula* causing powdery mildew and *Phytophthora infestans* causing late blight, the Chinese cabbage pathogen *Alternaria brassicae* causing leaf spot, the peach pathogen *Xanthomonas pruni,* the tea pathogen *Pestalozia longiseta,* and the tobacco pathogen *TSWV (tomato spotted wilt virus),* . Most preferably, the pathogens attacking a plant are selected from the group consisting of the rice pathogens *Pyricularia grisea* causing rice blast and *Xanthomonas oryzae* pv. *oryzae* causing bacterial leaf blight, and the banana pathogen *Mycosphaerella fijiensis* causing Black Sigatoka, the wheat pathogen *Blumeria graminis* f.sp tritici causing powdery mildew, the cucumber pathogens *Colletotrichum orbiculare* causing anthracnose and *Pseudomonas syringae* pv. *lachlymans* causing bacterial leaf spot and the tea pathogen *Pestalozia longiseta.*

The term "abiotic stress" within the meaning of the present invention signifies that the plants are exposed to abiotic stress factors including nutritional deficiencies, micronutrient deficiencies, such as high to low Zn deficiency, limited availability of nitrogen nutrients, limited availability of phosphorus nutrients, high radiation exposure, strong light conditions, the avoidance of shade, ozone conditions, low water supply, drought, water logging, cold and heat conditions, osmotic stress, increased soil salinity, or increased exposure to minerals.

Zinc is essential for the normal healthy growth and reproduction of plants, animals and humans. When the supply of plant-available zinc is inadequate, crop yields and quality of crop products are impaired. In plants, zinc plays a key role as a structural constituent or regulatory co-factor of a wide range of different enzymes and proteins in many important biochemical pathways. When the supply of zinc to the plant is inadequate, the physiological functions of zinc cannot operate correctly and thus plant growth is adversely affected. This can result within the plant in visible symptoms of stress, which symptoms vary with species and which might include: stunting (reduced height), interveinal chlorosis (yellowing of the leaves between the veins), bronzing of chlorotic leaves, small and abnormally shaped leaves and/or stunting and rosetting of leaves (where the leaves form a whorl on shortened stems). So-called hidden deficiencies without obvious visible symptoms might lead to a 20 % loss of plant yield. Zinc-deficient soils causing hidden deficiency may cause a significant financial loss to the farmer. Thus, it is necessary to identify zinc-deficient soils as early as possible by soil testing or crop plant analysis. Once identified, zinc-deficient soils can be easily treated with zinc fertilizers to provide an adequate supply of zinc to the crops, where zinc sulphate is by far the most widely used fertilizer (cf. Zinc in Soils and Crop Nutrition by B.J. Alloway, 2nd Ed. Brussels, Paris, 2008).

The invention further relates to the above mentioned use of the compound of formula (I) or (II), wherein the compound of formula (I) or formula (II) is used in combination with at least one further agrochemically active compound.

In the present context, agrochemically active compounds are to be understood as meaning all substances which are or may be customarily used for treating plants. Fungicides, bactericides, insecticides, acaricides, nematicides, molluscicides, safeners, plant growth regulators and plant nutrients as well as biological control agents may be mentioned as being preferred.

Examples of fungicides which may be mentioned are:
(1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid.
(2) Inhibitors of the mitosis and cell division, for example benomyl, carbendazim, chlorfenazole, diethofencarb, ethaboxam, fuberidazole, pencycuron, thiabendazole, thiophanate, thiophanate-methyl and zoxamide.
(3) Inhibitors of the respiration, for example diflumetorim as CI-respiration inhibitor; bixafen, boscalid, carboxin, fenfuram, flutolanil, fluopyram, furametpyr, furmecyclox, isopyrazam (9R-component), isopyrazam (9S-component), mepronil, oxycarboxin, penthiopyrad, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyribencarb, trifloxystrobin as CIII-respiration inhibitor.
(4) Compounds capable to act as an uncoupler, like for example binapacryl, dinocap, fluazinam and meptyldinocap.
(5) Inhibitors of the ATP production, for example fentin acetate, fentin chloride, fentin hydroxide, and silthiofam.
(6) Inhibitors of the amino acid and/or protein biosynthesis, for example andoprim, blasticidin-S, cyprodinil, kasugamycin, kasugamycin hydrochloride hydrate, mepanipyrim and pyrimethanil.
(7) Inhibitors of the signal transduction, for example fenpiclonil, fludioxonil and quinoxyfen.
(8) Inhibitors of the lipid and membrane synthesis, for example biphenyl, chlozolinate, edifenphos, etridiazole, iodocarb, iprobenfos, iprodione, isoprothiolane, procymidone, propamocarb, propamocarb hydrochloride, pyrazophos, tolclofos-methyl and vinclozolin.
(9) Inhibitors of the ergosterol biosynthesis, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipconazole, metconazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole.
(10) Inhibitors of the cell wall synthesis, for example benthiavalicarb, dimethomorph, flumorph, iprovalicarb, mandipropamid, polyoxins, polyoxorim, prothiocarb, validamycin A, and valiphenal.
(11) Inhibitors of the melanine biosynthesis, for example carpropamid, diclocymet, fenoxanil, phthalide, pyroquilon and tricyclazole.
(12) Compounds capable to induce a host defense, like for example acibenzolar-S-methyl, Probenazole, and Tiadinil.
(13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, sulphur and sulphur preparations including calcium polysulphide, thiram, tolylfluanid, zineb and ziram.
(14) Further compounds like for example 2,3-dibutyl-6-chlorothieno[2,3-d]pyrimidin-4(3H)-one, ethyl (2Z)-3-amino-2-cyano-3-phenylprop-2-enoate, N-[2-(1,3-dimethylbutyl)phenyl]-5-fluoro-1,3-dimethyl-1H-pyrazole-4-carboxamide, N-{2-[1,1'-bi(cyclopropyl)-2-yl]phenyl}-3-(difluoromethyl)-1-methyl-1H-pyrazole-4-carboxamide, 3-(difluoromethyl)-1-methyl-N-(3',4',5'-trifluorobiphenyl-2-yl)-1H-pyrazole-4-carboxamide, 3-(difluoromethyl)-N-[4-fluoro-2-(1,1,2,3,3,3-hexafluoropropoxy)phenyl]-1-methyl-1H-pyrazole-4-carboxamide, (2E)-2-(2-{[6-(3-chloro-2-methylphenoxy)-5-fluoropyrimidin-4-yl]oxy}phenyl)-2-(methoxyimino)-N-methylethanamide, (2E)-2-{2-[({[(2E,3E)-4-(2,6-dichlorophenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyridine-3-carboxamide, N-(3-ethyl-3,5,5-trimethylcyclohexyl)-3-(formylamino)-2-hydroxybenzamide, 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}imino)methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, Sedaxane, O-{1-[(4-methoxyphenoxy)methyl]-2,2-dimethylpropyl} 1H-imidazole-1-carbothioate, N-[2-(4-{[3-(4-chlorophenyl)prop-2-yn-1-yl]oxy}-3-methoxyphenyl)ethyl]-N²-(methylsulfonyl)valinamide, 5-chloro-7-(4-methylpiperidin-1-yl)-6-(2,4,6-trifluorophenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoroethoxy)phenyl]-3-(trifluoromethyl)-1H-pyrazole-4-carboxamide, 2,3,5,6-tetrachloro-4-(methylsulfonyl)pyridine, 2-butoxy-6-iodo-3-propyl-4H-chromen-4-one, 2-phenylphenol and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, quinolin-8-ol, quinolin-8-ol sulfate (2:1) (salt), 5-methyl-6-octyl-3,7-dihydro[1,2,4]triazolo[1,5-a]pyrimidin-7-amine, 5-ethyl-6-octyl-3,7-dihydro[1,2,4]triazolo[1,5-a]pyrimidin-7-amine, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methoxyacrylate, methyl isothiocyanate, metrafenone, (5-bromo-2-methoxy-4-methylpyridin-3-yl)(2,3,4-trimethoxy-6-methylphenyl)methanone, mildiomycin, tolnifanide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)-phenyl]propanamide, N-[(5-bromo-3-chloropyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)ethyl]-2-fluoro-4-iodopyridine-3-carboxamide, N-{(Z)-[(cyclopropylmethoxy)imino][6-(difluoromethoxy)-2,3-difluorophenyl]methyl}-2-phenylacetamide, N-{(E)-[(cyclopropylmethoxy)imino][6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-N'-prop-2-yn-1-ylthiophene-2-sulfonohydrazide and zarilamid.

Examples of bactericides which may be mentioned are:
bronopol, dichlorophen, nitrapyrin, nickel dimethyldithiocarbamate, kasugamycin, octhilinone, furancarboxylic acid, oxytetracycline, probenazole, streptomycin, tecloftalam, copper sulphate and other copper preparations.

Examples of insecticides, acaricides and nematicides which may be mentioned are:
(1) Acetylcholinesterase (AChE) inhibitors, for example carbamates, e.g. alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, and xylylcarb; or organophosphates, e.g. acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl, O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetra-chlorvinphos, thiometon, triazophos, triclorfon, vamidothion, and imicyafos.
(2) GABA-gated chloride channel antagonists, for example organochlorines, e.g. camphechlor, chlordane, endosulfan, gamma-HCH, HCH, heptachlor, lindane, and methoxychlor; or fiproles (phenylpyrazoles), e.g. acetoprole, ethiprole, fipronil, pyrafluprole, pyriprole, and vaniliprole.
(3) Sodium channel modulators/voltage-dependent sodium channel blockers, for example pyrethroids, e.g. acrinathrin, allethrin (d-cis-trans, d-trans), beta-cyfluthrin, bifenthrin, bioallethrin, bioallethrin S-cyclopentyl isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, empenthrin (1R isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1R trans isomer), prallethrin, profluthrin, protrifenbute, pyresmethrin, resmethrin, RU 15525, silafluofen, tau-fluvalinate, tefluthrin, terallethrin, tetramethrin (-1R-isomer), tralomethrin, transfluthrin, ZXI 8901, pyrethrin (pyrethrum), eflusilanat; DDT; or methoxychlor.
(4) Nicotinergic acetylcholine receptor agonists/antagonists, for example chloronicotinyls, e.g. acetamiprid, clothianidin, dinotefuran, imidacloprid, imidaclothiz, nitenpyram, nithiazine, thiacloprid, thiamethoxam, AKD-1022; or nicotine, bensultap, cartap, thiosultap-sodium, and thiocylam.
(5) Allosteric acetylcholine receptor modulators (agonists), for example spinosyns, e.g. spinosad and spinetoram.
(6) Chloride channel activators, for example mectins/macrolides, e.g. abamectin, emamectin, emamectin benzoate, ivermectin, lepimectin, and milbemectin; or juvenile hormone analogues, e.g. hydroprene, kinoprene, methoprene, epofenonane, triprene, fenoxycarb, pyriproxifen, and diofenolan.
(7) Active ingredients with unknown or non-specific mechanisms of action, for example gassing agents, e.g. methyl bromide, chloropicrin and sulfuryl fluoride; selective antifeedants, e.g. cryolite, pymetrozine, pyrifluquinazon and flonicamid; or mite growth inhibitors, e.g. clofentezine, hexythiazox, etoxazole.
(8) Oxidative phosphorylation inhibitors, ATP disruptors, for example diafenthiuron; organotin compounds, e.g. azocyclotin, cyhexatin and fenbutatin oxide; or propargite, tetradifon.
(9) Oxidative phoshorylation decouplers acting by interrupting the H proton gradient, for example chlorfenapyr, binapacryl, dinobuton, dinocap and DNOC.
(10) Microbial disruptors of the insect gut membrane, for example *Bacillus thuringiensis* strains.
(11) Chitin biosynthesis inhibitors, for example benzoylureas, e.g. bistrifluron, chlorfluazuron, diflubenzuron, fluazuron, flucycloxuron, flufenoxuron, hexaflumuron, lufenuron, novaluron, noviflumuron, penfluron, teflubenzuron or triflumuron.
(12) Buprofezin.
(13) Moulting disruptors, for example cyromazine.
(14) Ecdysone agonists/disruptors, for example diacylhydrazines, e.g. chromafenozide, halofenozide, methoxyfenozide, tebufenozide, and Fufenozide (JS118); or azadirachtin.
(15) Octopaminergic agonists, for example amitraz.
(16) Site III electron transport inhibitors/site II electron transport inhibitors, for example hydramethylnon; acequinocyl; fluacrypyrim; or cyflumetofen and cyenopyrafen.
(17) Electron transport inhibitors, for example Site I electron transport inhibitors, from the group of the METI acaricides, e.g. fenazaquin, fenpyroximate, pyrimidifen, pyridaben, tebufenpyrad, tolfenpyrad, and rotenone; or voltage-dependent sodium channel blockers, e.g. indoxacarb and metaflumizone.
(18) Fatty acid biosynthesis inhibitors, for example tetronic acid derivatives, e.g. spirodiclofen and spiromesifen; or tetramic acid derivatives, e.g. spirotetramat.
(19) Neuronal inhibitors with unknown mechanism of action, e.g. bifenazate.
(20) Ryanodine receptor effectors, for example diamides, e.g. flubendiamide, (R),(S)-3-chloro-N¹-{2-methyl-4-[1,2,2,2-tetrafluoro-1-(trifluoromethyl)ethyl]phenyl}-N²-(1-methyl-2-methylsulphonylethyl)phthalamide, chlorantraniliprole (Rynaxypyr), or Cyantraniliprole (Cyazypyr).
(21) Further active ingredients with unknown mechanism of action, for example amidoflumet, benclothiaz, benzoximate, bromopropylate, buprofezin, chinomethionat, chlordimeform, chlorobenzilate, clothiazoben, cycloprene, dicofol, dicyclanil, fenoxacrim, fentrifanil, flubenzimine, flufenerim, flutenzin, gossyplure, japonilure, metoxadiazone, petroleum, potassium oleate, pyridalyl, sulfluramid, tetra-sul, triarathene or verbutine; or one of the following known active compounds 4-{[(6-bromopyrid-3-yl)methyl](2-fluoroethyl)amino}furan-2(5H)-one, 4-{[(6-fluoropyrid-3-yl)methyl](2,2-difluoroethyl)amino}furan-2(5H)-one, 4-{[(2-chloro-1,3-thiazol-5-yl)methyl](2-fluoroethyl)amino}furan-2(5H)-one, 4-{[(6-chloropyrid-3-yl)methyl](2-fluoroethyl)amino}furan-2(5H)-one, 4-{[(6-chloropyrid-3-yl)methyl](2,2-difluoroethyl)amino}furan-2(5H)-one (all known from WO 2007/115644), 4-{[(5,6-dichloropyrid-3-yl)methyl](2-fluoroethyl)amino}furan-2(5H)-one (known from WO 2007/115646), 4-{[(6-chloro-5-fluoropyrid-3-yl)methyl](methyl)amino}furan-2(5H)-one, 4-{[(6-chloro-5-fluoropyrid-3-yl)methyl](cyclopropyl)amino}furan-2(5H)-one (both from WO 2007/115643), 4-{[(6-chloropyrid-3-yl)methyl](cyclopropyl)amino}furan-2(5H)-one, 4-{[(6-chloropyrid-3-yl)methyl](methyl)amino}furan-2(5H)-one (both from EP-A-0 539 588), [(6-chloropyidin-3-yl)methyl](methyl)oxido-λ⁴-sulfanylidene cyanamide, [1-(6-chloropyridin-3-yl)ethyl](methyl)oxido-λ⁴-sulfanylidene cyanamide (both from WO 2007/149134) and its diastereomeres (A) and (B) 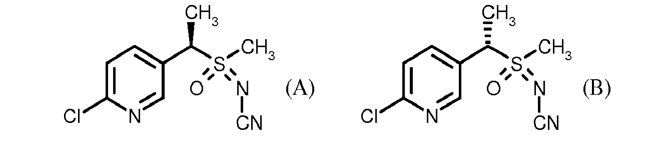 (also known from WO 2007/149134), [(6-trifluoromethylpyridin-3-yl)methyl](methyl)oxido-λ⁴-sulfanylidene cyanamide (known from WO 2007/095229), or [1-(6-trifluoromethylpyridin-3-yl)ethyl](methyl)oxido-λ⁴-sulfanylidene cyanamide (known from WO 2007/149134) and its diastereomeres (C) and (D), namelv Sulfoxaflor(also known from WO 2007/149134)

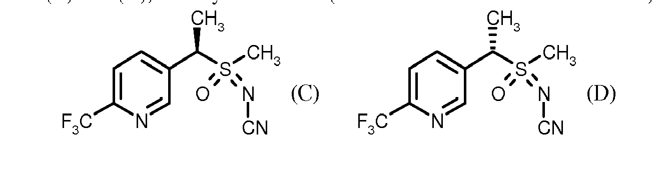

Examples of molluscicides which may be mentioned are metaldehyde and methiocarb.

Examples of safeners which may be mentioned are:
(1) Heterocyclic carboxylic acid derivates, for example dichlorophenylpyrazolin-3-carboxylic acid derivatives, e.g. 1-(2,4-dichlorophenyl)-5-(ethoxycarbonyl)-5-methyl-4,5-dihydro-1H-pyrazole-3-carboxylic acid, diethyl 1-(2,4-dichlorophenyl)-4,5-dihydro-5-methyl-1H-pyrazole-3,5-dicarboxylate ("mefenpyr-diethyl"), and similar compounds known from WO 91/07874; for example dichlorophenylpyrazolecarboxylic acid derivatives, e.g. ethyl 1-(2,4-dichlorophenyl)-5-methyl-1H-pyrazole-3-carboxylate, ethyl 1-(2,4-dichlorophenyl)-5-isopropyl-1H-pyrazole-3-carboxylate, ethyl 5-tert-butyl-1-(2,4-dichlorophenyl)-1H-pyrazole-3-carboxylate and similar compounds known from EP-A 0 333 131 and EP-A 0 269 806; for example 1,5-diphenylpyrazole-3-carboxylic acid derivatives, e.g. ethyl 1-(2,4-dichlorophenyl)-5-phenyl-1H-pyrazole-3-carboxylate, methyl 1-(2-chlorophenyl)-5-phenyl-1H-pyrazole-3-carboxylate, and similar compounds known from EP-A 0 268 554; for example triazolecarboxylic acid derivatives, e.g. fenchlorazole, fenchlorazole-ethyl, and similar compounds known from EP-A 0 174 562 and EP-A 0 346 620; for example 2-isoxazoline-3-carboxylic acid derivatives, e.g. ethyl 5-(2,4-dichlorobenzyl)-4,5-dihydro-1,2-oxazole-3-carboxylate, ethyl 5-phenyl-4,5-dihydro-1,2-oxazole-3-carboxylate and similar compounds known from WO 91/08202, or 5,5-diphenyl-4,5-dihydro-1,2-oxazole-3-carboxylic acid, ethyl 5,5-diphenyl-4,5-dihydro-1,2-oxazole-3-carboxylate ("isoxadifen-ethyl"), propyl 5,5-diphenyl-4,5-dihydro-1,2-oxazole-3-carboxylate, ethyl 5-(4-fluorophenyl)-5-phenyl-4,5-dihydro-1,2-oxazole-3-carboxylate known from WO 95/07897.
(2) Derivatives of 8-quinolinol, for example derivatives of (quinolin-8-yloxy)acetic acid, e.g. heptan-2-yl [(5-chloroquinolin-8-yl)oxy]acetate ("cloquintocet-mexyl"), 4-methylpentan-2-yl [(5-chloroquinolin-8-yl)oxy]acetate,4-(allyloxy)butyl [(5-chloroquinolin-8-yl)oxy]acetate, 1-(allyloxy)propan-2-yl [(5-chloroquinolin-8-yl)oxy]acetate, ethyl [(5-chloroquinolin-8-yl)oxy]acetate, methyl [(5-chloroquinolin-8-yl)oxy]acetate, allyl [(5-chloroquinolin-8-yl)oxy]acetate, 2-{[propylideneamino]oxy}ethyl [(5-chloroquinolin-8-yl)oxy]acetate, 2-oxopropyl [(5-chloroquinolin-8-yl)oxy]acetate, and similar compounds known from EP-A 0 086 750, EP-A 0094349, EP-A 0191 736 or EP-A 0 492 366, as well as [(5-chloroquinolin-8-yl)oxy]acetic acid, its hydrates and salts, e.g. the lithium, sodium, potassium, calcium, magnesium, aluminum, iron, ammonium, quartanary ammonium, sulfonium or phosphonium salts as known from WO 02/34048; for example derivatives of [(5-chloroquinolin-8-yl)oxy]malonic acid, e.g diethyl [(5-chloroquinolin-8-yl)oxy]malonate, diallyl [(5-chloroquinolin-8-yl)oxy]malonate, ethyl methyl [(5-chloroquinolin-8-yl)oxy]malonate, and similar compounds known from EP-A 0 582 198.
(3) Dichloroacetamides, which are often used as pre-emergence safeners (soil active safeners), e.g. "dichlormid" (N,N-diallyl-2,2-dichloroacetamide), "R-29148" (3dichloroacetyl-2,2,5-trimethyl-1,3-oxazolidine) and "R-28725" (3-dichloroacetyl-2,2,-dimethyl-1,3-oxazolidine) both of the company Stauffer, "benoxacor" (4-dichloroacetyl-3,4-dihydro-3-methyl-2H-1,4-benzoxazine), "PPG-1292" (N-allyl-N-[(1,3-dioxolan-2-yl)-methyl]-dichloroacetamide) of PPG Industries, "DKA-24" (N-allyl-N-[(allylaminocarbonyl)methyl]-dichloroacetamide) of Sagro-Chem, "AD-67" or "MON 4660" (3-dichloroacetyl-1-oxa-3-aza-spiro[4,5]decane) of Nitrokemia and Monsanto, "TI-35" (1-dichloroacetyl-azepane) of TRI-Chemical RT, "diclonon" (dicyclonon) or "BAS145138" or "LAB145138" (3-dichloroacetyl-2,5,5-trimethyl-1,3-diazabicyclo[4.3.0]nonane) of BASF, "Furilazol" or "MON 13900" [(RS)-3-dichloroacetyl-5-(2-furyl)-2,2-dimethyloxazolidine], as well as there (R)-isomer.
(4) Acylsulfonamides, for example N-acylsulfonamide of the formula (II) 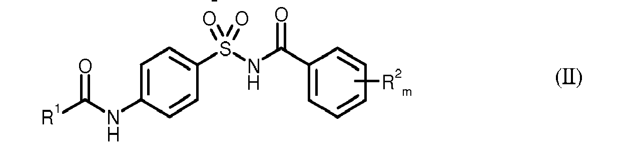 or its salts (known from WO 97/45016), wherein
   R¹ represents (C₁-C₆)alkyl, which is unsubstituted or mono- to trisubstituted by substituents selected from the group consisting of halogen, (C₁-C₄)alkoxy, (C₁-C₆)haloalkoxy and (C₁-C₄)alkylthio;
   R² represents halogen, (C₁-C₄)alkyl, (C₁-C₄)alkoxy, CF₃;
   m is 1 or 2;
   or for example 4-(benzoylsulfamoyl)benzamides of the formula (III) 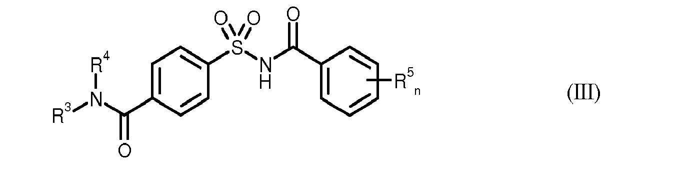 or its salts (known from WO 99/16744), wherein
   R³, R⁴ independently of one another represent hydrogen, (C₁-C₆)alkyl, (C₃-C₆)alkenyl, (C₃-C₆)alkynyl, (C₃-C₆)cycloalkyl,
   R⁵ represents halogen, (C₁-C₄)alkyl, (C₁-C₄)haloalkyl or (C₁-C₄)alkoxy
   n is 1 or 2,
   in particular compounds of formula (III), wherein
   R³ = cyclopropyl, R⁴ = hydrogen and R⁵ₙ = 2-OMe, ("cyprosulfamide"),
   R³ = cyclopropyl, R⁴ = hydrogen and R⁵ₙ = 5-Cl-2-OMe,
   R³ = ethyl, R⁴ = hydrogen and R⁵ₙ = 2-OMe,
   R³ = isopropyl, R⁴ = hydrogen and R⁵ₙ = 5-Cl-2-OMe,
   R³ = isopropyl, R⁴ = hydrogen and R⁵ₙ = 2-OMe.
   or for example benzoylsulfamoylphenylureas of the formula (IV) 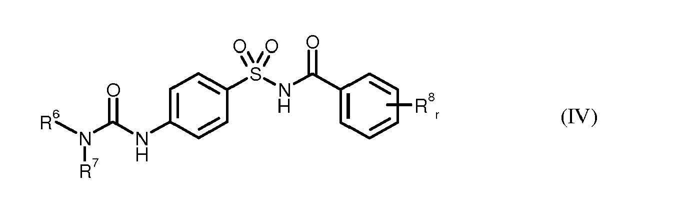 (known from EP-A 0 365 484), wherein
   R⁶, R⁷ independently of one another represent hydrogen, (C₁-C₈)alkyl, (C₃-C₆)alkenyl, (C₃-C₆)alkynyl,
   R⁸ represents halogen, (C₁-C₄)alkyl, (C₁-C₄)alkoxy, CF₃
   r is 1 or 2;
   in particular
   1-[4-(N-2-methoxybenzoylsulfamoyl)phenyl]-3-methyl urea,
   1-[4-(N-2-methoxybenzoylsulfamoyl)phenyl]-3,3-dimethyl urea,
   1-[4-(N-4,5-dimethylbenzoylsulfamoyl)phenyl]-3-methyl urea.
(5) Hydroxyaromatic compounds and aromatic-aliphatic carboxylic acid derivatives, e.g. ethyl 3,4,5-triacetoxybenzoate, 4-hydroxy-3,5-dimethoxybenzoic acid, 3,5-dihydroxybenzoic acid, 2,4-dihydroxybenzoic acid, 4-fluoro-2-hydroxybenzoic acid, 2-hydroxycinnamic acid, 2,4-dichlorocinnamic acid (cf. WO 2004/084631, WO 2005/015994, WO 2005/016001).
(6) 1,2-Dihydrochinoxalin-2-ones, e.g. 1-methyl-3-(2-thienyl)-1,2-dihydrochinoxalin-2-one, 1-methyl-3-(2-thienyl)-1,2-dihydrochinoxalin-2-thione, 1-(2-aminoethyl)-3-(2-thienyl)-1,2-dihydrochinoxalin-2-one hydrochlorid, 1-(2-methylsulfonylaminoethyl)-3-(2-thienyl)-1,2-dihydrochinoxalin-2-one (cf. WO 2005/112630).
(7) Diphenylmethoxyacetic acid derivatives, e.g. methyl (diphenylmethoxy)acetate (CAS-Reg. No. 41858-19-9), ethyl (diphenylmethoxy)acetate or (diphenylmethoxy)acetic acid (cf. WO 98/38856).
(8) Compounds of formula (V) 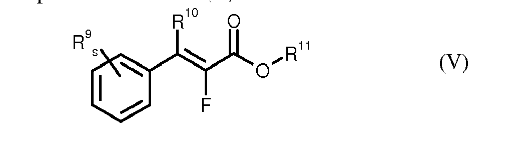 or its salts (known from WO 98/27049), wherein
   R⁹ represents halogen, (C₁-C₄)alkyl, (C₁-C₄)haloalkyl, (C₁-C₄)alkoxy, (C₁-C₄)haloalkoxy,
   R¹⁰ represents hydrogen or (C₁-C₄)alkyl,
   R¹⁰ represents hydrogen, in each case unsubstituted or mono- to trisubstituted (C₁-C₈)alkyl, (C₂-C₄)alkenyl, (C₂-C₄)alkynyl, or aryl, where the substituents are selected from the group consisting of halogen and (C₁-C₈)alkoxy,
   s is 0, 1 or 2.
(9) 3-(5-Tetrazolylcarbonyl)-2-chinolones, e.g. 1,2-dihydro-4-hydroxy-1-ethyl-3-(5-tetrazolylcarbonyl)-2-chinolone (CAS-Reg. No. 219479-18-2), 1,2-dihydro-4-hydroxy-1-methyl-3-(5-tetrazolyl-carbonyl)-2-chinolone (CAS-Reg. No. 95855-00-8) (cf. WO 99/00020).
(10) Compounds of the formulae (VI-a) and (VI-b) 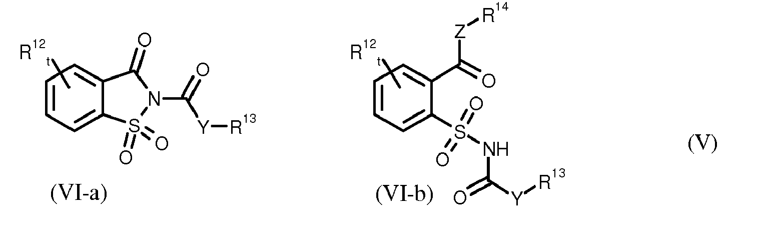 (known from WO 2007/023719 and WO 2007/023764), wherein
   R¹² represents halogen, (C₁-C₄)alkyl, methoxy, nitro, cyano, CF₃, OCF₃,
   Y, Z independently represent O or S,
   t is 0, 1, 2, 3 or 4,
   R¹³ represents (C₁-C₁₆)alkyl, (C₂-C₆)alkenyl, aryl, benzyl, halogenobenzyl,
   R¹⁴ represents hydrogen or (C₁-C₆)alkyl.
(11) Oxyimino compounds, known as seed treatment agents, e.g. "oxabetrinil" [(Z)-1,3-dioxolan-2-ylmethoxyimino(phenyl)acetonitril], "fluxofenim" [1-(4-chlorophenyl)-2,2,2-trifluoro-1-ethanone-O-(1,3-dioxolan-2-ylmethyl)-oxime], and "cyometrinil" or "CGA-43089" [(Z)-cyanomethoxyimino(phenyl)acetonitril], all known as seed treatment safener for sorghum against damage by metolachlor.
(12) Isothiochromanones, e.g. methyl [(3-oxo-1H-2-benzothiopyran-4(3H)-ylidene)methoxy]acetate (CAS-Reg. No. 205121-04-6) and similar compounds known from WO 98/13361.
(13) Compounds from the group consisting of "naphthalic anhydrid" (1,8-naphthalinedicarboxylic acid anhydride), which is known as seed treatment safener for corn (maize) against damage by thiocarbamate herbicides, "fenclorim" (4,6-dichloro-2-phenylpyrimidine), which is known as seed treatment safener in sown rice against damage by pretilachlor, "flurazole" (benzyl-2-chloro-4-trifluoromethyl-1,3-thiazol-5-carboxylate), which is known as seed treatment safener for sorghum against damage by alachlor and metolachlor, "CL 304415" (CAS-Reg. No. 31541-57-8), (4-carboxy-3,4-dihydro-2H-1-benzopyran-4-acetic acid) of American Cyanamid, which is known as safener for corn (maize) against damage by imidazolinones, "MG 191" (CAS-Reg. No. 96420-72-3) (2-dichloromethyl-2-methyl-1,3-dioxolane) of Nitrokemia, known as safener for corn (maize), "MG-838" (CAS-Reg. No. 133993-74-5), (2-propenyl 1-oxa-4-azaspiro[4.5]decane-4-carbodithioate) of Nitrokemia, "Disulfoton" (O,O-diethyl-S-2-ethylthioethyl phosphorodithioate), "dietholate" (O,O-diethyl-O-phenylphosphorothioate), "mephenate" (4-chlorophenyl-methylcarbamate).
(14) Compounds, which besides herbicidal activity als exhibit Safener activity in crops like rice, e.g. "Dimepiperate" or "MY-93" (*S*-1-methyl-1-phenylethyl-piperidin-1-carbothioate), which is known as safener for rice against damage by molinate, "daimuron" or "SK 23" [1-(1-methyl-1-phenylethyl)-3-p-tolyl-urea], which is known as safener for rice against damage by imazosulfuron, "cumyluron" = "JC-940" [3-(2-chlorophenylmethyl)-1-(1-methyl-1-phenylethyl)urea] (cf. JP-A 60-087254), which is known as safener for rice against damage by some herbicides, "methoxyphenon" or "NK 049" (3,3'-dimethyl-4-methoxy-benzophenone), which is known as safener for rice against damage by some herbicides, "CSB" [1-bromo-4-(chloromethylsulfonyl)benzene] of Kumiai (CAS-Reg. No. 54091-06-4), which is known as safener for rice against damage by some herbicides.
(15) Compounds, which are mainly used as herbicides, but which exhibit also safener activity on some crops, e.g. (2,4-dichlorophenoxy)acetic acid (2,4-D), (4-chlorophenoxy)acetic acid, (R,S)-2-(4-chlor-o-tolyloxy)propionic acid (mecoprop), 4-(2,4-dichlorophenoxy)butyric acid (2,4-DB), (4-chloro-o-tolyloxy)acetic acid (MCPA), 4-(4-chloro-o-tolyloxy)butyric acid, 4-(4-chlorophenoxy)butyric acid, 3,6-dichloro-2-methoxybenzoic acid (dicamba), 1-(ethoxycarbonyl)ethyl-3,6-dichloro-2-methoxybenzoate (lactidichlor-ethyl).

Examples of plant growth regulators which may be mentioned are chlorocholine chloride and ethephon.

Examples of plant nutrients which may be mentioned are customary inorganic or organic fertilizers for supplying plants with macro- and/or micronutrients.

Examples of biological control agents which may be mentioned are yeasts and bacteria, e.g. Metschnikowia fructicola or bacillus firmus.

Preferred fungicidal or insecticidal active compounds are selected from the group consisting of bacillus firmus, beta-cyfluthrin, bixafen, clothianidin, cyproconazole, ethiprole, fenamidone, fenhexamid, fipronil, flubendiamide, fluopicolide, fluopyram, fluoxastrobin, fluquinconazole, fosetyl-Al, imidacloprid, iprovalicarb, methiocarb, metominostrobin, oryzastrobin, pencycuron, penflufen, prochloraz-manganese chloride, propamocarb, propineb, prothioconazole, pyrimethanil, rynaxypyr, sedaxane, spinosad, spiroxamine, tebuconazole, tebuconazole, thiacloprid, thiamethoxam, thifluzamide, thiodicarb, triadimefon, triadimenol, trifloxystrobin, and 4-{[(6-chloropyrid-3-yl)methyl](2,2-difluoroethyl)amino}furan-2(5H)-one.

Also preferred fungicidal or insecticidal active compounds are selected from the group consisting of ethiprole, fipronil, imidacloprid, prochloraz-manganese chloride, propineb, rynaxypyr, spinosad, thiacloprid, thifluzamide, and trifloxystrobin.

Further preferred is the use of the compound of formula (I) in combination with imidacloprid, with imidacloprid and spinosad, with imidacloprid and spinosad and thifluzamide, with thiacloprid, or with fipronil and prochloraz-manganese chloride.

The present invention also relates to the use of a compound of formula (I) or formula (II), wherein this compound is used in combination with at least one fertilizer compound.

Examples for fertilizer compounds include NPK fertilizers containing nitrogen (N), phosphorus (P) and potassium (K), or salts or complexed forms of calcium (Ca), sulfur (S), magnesium (Mg), boron (B), chlorine (Cl), manganese (Mn), iron (Fe), zinc (Zn), copper (Cu), molybdenium (Mo) and selenium (Se). Among the salts, sulphates are especially preferred.

According to a further embodiment of the invention, the compound of formula (I) is used for inducing latent host defenses in a plant which are activated in the event of an attack by a phytopathogenic pathogen or pest or in the event of abiotic stress. According to a preferred embodiment of the invention, the compound of formula (I) is used for inducing latent host defenses in a plant which are activated in the event of an attack by a phytopathogenic pathogen or pest.

The present invention further relates to above mentioned use of the compound of formula (I) or (II), wherein the pathogen is selected from the group consisting of phytopathogenic fungi, bacteria, viruses, viroids, mycoplasma-like organisms, protozoa, insects, acari, and nematodes. According to a more preferred embodiment, the pathogen is selected from phytopathogenic fungi, bacteria, and insects.

Examples for pathogens are given under "attack by a phytopathogenic pathogen or pest" above.

According to the invention, it is possible to treat all plants and parts of plants. Plants are to be understood here as meaning all plants and plant populations, such as wanted and unwanted wild plants or crop plants (including naturally occurring crop plants). Crop plants can be plants which can be obtained by conventional breeding and optimization methods or by biotechnological and genetic engineering methods or combinations of these methods, including the transgenic plants and including plant cultivars which can or cannot be protected by varietal property rights. Parts of plants are to be understood as meaning all above-ground and below-ground parts and organs of the plants, such as shoot, leaf, flower and root, examples which may be mentioned being leaves, needles, stems, trunks, flowers, fruit bodies, fruits and seeds and also roots, tubers and rhizomes. Plant parts also include harvested material and vegetative and generative propagation material, for example seedlings, tubers, rhizomes, cuttings and seeds. Preference is given to the treatment of the plants and the above-ground and below-ground parts and organs of the plants, such as shoot, leaf, flower and root, examples which may be mentioned being leaves, needles, stems, trunks, flowers, fruits.

The following plants may be mentioned as plants which can be treated according to the invention: cotton, flax, grapevines, fruit, vegetable, such as *Rosaceae sp.* (for example pomaceous fruit, such as apples and pears, but also stone fruit, such as apricots, cherries, almonds and peaches and soft fruit such as strawberries), *Ribesioidae sp.*, *Juglandaceae sp.*, *Betulaceae sp.*, *Anacardiaceae sp.*, *Fagaceae sp.*, *Moraceae sp.*, *Oleaceae sp.*, *Actinidaceae sp.*, *Lauraceae sp., Musaceae sp.* (for example banana trees and plantations), *Rubiaceae sp.* (for example coffee), *Theaceae sp.*, *Sterculiceae sp.*, *Rutaceae sp.* (for example lemons, oranges and grapefruit), *Solanaceae sp.* (for example tomatoes), *Liliaceae sp.*, *Asteraceae sp.* (for example lettuce), *Umbelliferae sp.*, *Cruciferae sp.*, *Chenopodiaceae sp.*, *Cucurbitaceae sp.* (for example cucumbers), *Alliaceae sp.* (for example leek, onions), *Papilionaceae sp.* (for example peas); major crop plants, such as *Gramineae sp.* (for example maize, lawn, cereals such as wheat, rye, rice, barley, oats, millet and triticale), *Poaceae sp.* (for example sugarcane), *Asteraceae sp.* (for example sunflowers), *Brassicaceae sp.* (for example white cabbage, red cabbage, broccoli, cauliflowers, brussel sprouts, pak choi, kohlrabi, garden radish, and also oilseed rape, mustard, horseradish and cress), *Fabacae sp.* (for example beans, peas), *Papilionaceae sp.* (for example soya beans), *Solanaceae sp.* (for example potatoes), *Chenopodiaceae sp.* (for example sugarbeet, fodderbeet, swiss chard, beetroot); crop plants and ornamental plants in garden and forest; and also in each case genetically modified varieties of these plants. Preferably, rice, banana, wheat, cucumber, pumpkin, strawberry, eggplant, tomato, Chinese cabbage, peach, tea, and tobacco are treated according to the invention.

Most preferably rice, banana, wheat, cucumber, and tea are treated according to the invention. Accordingly, the present invention further relates to the above mentioned use of the compound of formula (I) or (II), wherein the plant is rice, banana, wheat, cucumber, or tea.

The present invention further relates to above mentioned use of the compound of formula (I) or (II), wherein the plant is a transgenic plant.

Genetically modified organisms are for example plants or seeds. Genetically modified plants are plants whose genome has, stably integrated, a certain heterologous gene coding for a certain protein. Here, "heterologous gene" is meant to be understood as a gene which confers novel agronomical properties on the transformed plant, or a gene which improves the agronomical quality of the modified plant.

As already mentioned above, it is possible to treat all plants and their parts according to the invention. In a preferred embodiment, wild plant species and plant cultivars, or those obtained by conventional biological breeding methods, such as crossing or protoplast fusion, and parts thereof, are treated. In a further preferred embodiment, transgenic plants and plant cultivars obtained by genetic engineering methods, if appropriate in combination with conventional methods (genetically modified organisms), and parts thereof are treated. The terms "parts", "parts of plants" and "plant parts" have been explained above. Particularly preferably, plants of the plant cultivars which are in each case commercially available or in use are treated according to the invention.

The preferred transgenic plants or plant cultivars (obtained by genetic engineering) which are to be treated according to the invention include all plants which, by virtue of the genetic modification, received genetic material which imparts particularly advantageous, useful traits to these plants. Examples of such traits are better plant growth, increased tolerance to high or low temperatures, increased tolerance to drought or to water or soil salt content, increased flowering performance, easier harvesting, accelerated maturation, higher harvest yields, higher quality and/or a higher nutritional value of the harvested products, better storage stability and/or processability of the harvested products. Further and particularly emphasized examples of such traits are a better defense of the plants against animal and microbial pests, such as against insects, mites, phytopathogenic fungi, bacteria and/or viruses, and also increased tolerance of the plants to certain herbicidally active compounds. Examples of transgenic plants which may be mentioned are the important crop plants, such as cereals (wheat, rice), maize, soya beans, potatoes, cotton, oilseed rape, and also fruit plants (with the fruits apples, pears, citrus fruits and grapes), and particular emphasis is given to maize, soya beans, potatoes, cotton, and oilseed rape. "Traits" that are emphasized are in particular increased defenseof the plants against insects by virtue of toxins formed in the plants, in particular those formed in the plants by the genetic material from Bacillus thuringiensis (for example by the genes CryIA(a), CryIA(b), CryIA(c), CryIIA, CryIIIA, CryIIIB2, Cry9c Cry2Ab, Cry3Bb and CryIF and also combinations thereof) (hereinbelow referred to as "Bt plants"). Traits that are also particularly emphasized are the increased tolerance of the plants to certain herbicidally active compounds, for example imidazolinones, sulphonylureas, glyphosate or phosphinotricin (for example the "PAT" gene). The genes which impart the desired traits in question can also be present in combination with one another in the transgenic plants. Examples of "Bt plants" which may be mentioned are maize varieties, cotton varieties, soya bean varieties and potato varieties which are sold under the trade names YIELD GARD® (for example maize, cotton, soya beans), KnockOut^{®} (for example maize), StarLink^{®} (for example maize), Bollgard^{®} (cotton), Nucotn^{®} (cotton) and NewLeaf^{®} (potatoes). Examples of herbicide-tolerant plants which may be mentioned are maize varieties, cotton varieties and soya bean varieties which are sold under the trade names Roundup Ready^{®} (tolerance to glyphosate, for example maize, cotton, soya bean), Liberty Link^{®} (tolerance to phosphinotricin, for example oilseed rape), IMI^{®} (tolerance to imidazolinones) and STS^{®} (tolerance to sulphonylureas, for example maize). Herbicide-resistant plants (plants bred in a conventional manner for herbicide tolerance) which may be mentioned include the varieties sold under the name Clearfield® (for example maize). Of course, these statements also apply to plant cultivars having these genetic traits or genetic traits still to be developed, which plant cultivars will be developed and/or marketed in the future.

The fungicides used according to the invention are generally applied in form of a composition comprising at least Isotianil or Tiadinil as mentioned above. Preferably the fungicidal composition comprises agriculturally acceptable additives, solvents, carriers, surfactants, or extenders.

The present invention furthermore relates to compositions comprising the active compound combinations according to the invention. Preferably, the compositions are fungicidal compositions comprising agriculturally suitable carriers or extenders.

According to the invention, carrier is to be understood as meaning a natural or synthetic, organic or inorganic substance which is mixed or combined with the active compounds for better applicability, in particular for application to plants or plant parts or seeds. The carrier, which may be solid or liquid, is generally inert and should be suitable for use in agriculture.

Suitable solid carriers are: for example ammonium salts and natural ground minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such carriers. Solid carriers suitable for granules are: for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks. Suitable emulsifiers and/or foam-formers are: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates, and also protein hydrolysates. Suitable dispersants are: for example lignosulphite waste liquors and methylcellulose.

Suitable liquefied gaseous extenders or carriers are liquids which are gaseous at ambient temperature and under atmospheric pressure, for example aerosol propellants, such as butane, propane, nitrogen and carbon dioxide.

Tackifiers, such as carboxymethylcellulose and natural and synthetic polymers in the form of powders, granules and latices, such as gum arabic, polyvinyl alcohol, polyvinyl acetate, or else natural phospholipids, such as cephalins and lecithins and synthetic phospholipids can be used in the formulations. Other possible additives are mineral and vegetable oils.

If the extender used is water, it is also possible for example, to use organic solvents as auxiliary solvents. Suitable liquid solvents are essentially: aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethyl sulphoxide, and also water.

The compositions according to the invention may comprise additional further components, such as, for example, surfactants. Suitable surfactants are emulsifiers, dispersants or wetting agents having ionic or nonionic properties, or mixtures of these surfactants. Examples of these are salts of polyacrylic acid, salts of lignosulphonic acid, salts of phenolsulphonic acid or naphthalenesulphonic acid, polycondensates of ethylene oxide with fatty alcohols or with fatty acids or with fatty amines, substituted phenols (preferably alkylphenols or arylphenols), salts of sulphosuccinic esters, taurine derivatives (preferably alkyl taurates), phosphoric esters of polyethoxylated alcohols or phenols, fatty esters of polyols, and derivatives of the compounds containing sulphates, sulphonates and phosphates. The presence of a surfactant is required if one of the active compounds and/or one of the inert carriers is insoluble in water and when the application takes place in water. The proportion of surfactants is between 5 and 40 per cent by weight of the composition according to the invention.

It is possible to use colorants such as inorganic pigments, for example iron oxide, titanium oxide, Prussian blue, and organic dyes, such as alizarin dyes, azo dyes and metal phthalocyanine dyes, and trace nutrients, such as salts of iron, manganese, boron, copper, cobalt, molybdenum and zinc.

If appropriate, other additional components may also be present, for example protective colloids, binders, adhesives, thickeners, thixotropic substances, penetrants, stabilizers, sequestering agents, complex formers. In general, the active compounds can be combined with any solid or liquid additive customarily used for formulation purposes.

In general, the compositions according to the invention comprise between 0.05 and 99 per cent by weight of the active compound combination according to the invention, preferably between 10 and 70 per cent by weight, particularly preferably between 20 and 50 per cent by weight, most preferably 25 per cent by weight.

The active compound combinations or compositions according to the invention can be used as such or, depending on their respective physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspension concentrates, suspoemulsion concentrates, soluble concentrates, suspensions, wettable powders, soluble powders, dusts and granules, water-soluble granules or tablets, water-soluble powders for the treatment of seed, wettable powders, natural products and synthetic substances impregnated with active compound, and also microencapsulations in polymeric substances and in coating materials for seed, and also ULV cold-fogging and warm-fogging formulations.

The formulations mentioned can be prepared in a manner known per se, for example by mixing the active compounds or the active compound combinations with at least one additive. Suitable additives are all customary formulation auxiliaries, such as, for example, organic solvents, extenders, solvents or diluents, solid carriers and fillers, surfactants (such as adjuvants, emulsifiers, dispersants, protective colloids, wetting agents and tackifiers), dispersants and/or binders or fixatives, preservatives, dyes and pigments, defoamers, inorganic and organic thickeners, water repellents, if appropriate siccatives and UV stabilizers, gibberellins and also water and further processing auxiliaries. Depending on the formulation type to be prepared in each case, further processing steps such as, for example, wet grinding, dry grinding or granulation may be required.

Organic diluents that may be present are all polar and non-polar organic solvents that are customarily used for such purposes. Preferred are ketones, such as methyl isobutyl ketone and cyclohexanone, furthermore amides, such as dimethylformamide and alkanecarboxamides, such as N,N-dimethyldecanamide and N,N-dimethyloctanamide, furthermore cyclic compounds, such as N-methylpyrrolidone, N-octylpyrrolidone, N-dodecylpyrrolidone, N-octylcaprolactam, N-dodecylcaprolactam and butyrolactone, additionally strongly polar solvents, such as dimethyl sulphoxide, furthermore aromatic hydrocarbons, such as xylene, Solvesso™, mineral oils, such as white spirit, petroleum, alkylbenzenes and spindle oil, moreover esters, such as propylene glycol monomethyl ether acetate, dibutyl adipate, hexyl acetate, heptyl acetate, tri-n-butyl citrate and din-butyl phthalate, and furthermore alcohols, such as, for example, benzyl alcohol and 1-methoxy-2-propanol.

Solid carriers suitable for granules are: for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks.

Suitable surfactants (adjuvants, emulsifiers, dispersants, protective colloids, wetting agents and tackifiers) are customary ionic and nonionic substances. Examples which may be mentioned are ethoxylated nonylphenols, polyalkylene glycol ethers of straight-chain or branched alcohols, products of reactions of alkylphenols with ethylene oxide and/or propylene oxide, products of reactions of fatty amines with ethylene oxide and/or propylene oxide, furthermore fatty esters, alkylsulphonates, alkyl sulphates, alkyl ether sulphates, alkyl ether phosphates, aryl sulphates, ethoxylated arylalkylphenols, such as, for example, tristyrylphenol ethoxylates, furthermore ethoxylated and propoxylated arylalkylphenols and also sulphated or phosphated arylalkylphenol ethoxylates or ethoxy- and propoxylates. Mention may furthermore be made of natural and synthetic water-soluble polymers, such as lignosulphonates, gelatine, gum arabic, phospholipids, starch, hydrophobically modified starch and cellulose derivatives, in particular cellulose esters and cellulose ethers, furthermore polyvinyl alcohol, polyvinyl acetate, polyvinylpyrrolidone, polyacrylic acid, polymethacrylic acid and copolymers of (meth)acrylic acid and (meth)acrylic acid esters, and moreover also alkali metal hydroxide-neutralized copolymers of methacrylic acid and methacrylic ester and condensates of optionally substituted naphthalenesulphonic acid salts with formaldehyde.

Suitable solid fillers and carriers are all substances customarily used for this purpose in crop pretection compositions. Inorganic particles, such as carbonates, silicates, sulphates and oxides having a mean particle size of from 0.005 to 20 µm, particularly preferably from 0.02 to 10 µm, may be mentioned as being preferred. Examples which may be mentioned are ammonium sulphate, ammonium phosphate, urea, calcium carbonate, calcium sulphate, magnesium sulphate, magnesium oxide, aluminium oxide, silicon dioxide, finely divided silicic acid, silica gels, natural and synthetic silicates and alumosilicates and vegetable products such as cereal meal, wood powder and cellulose powder.

Suitable colorants that may be present in the seed dressing formulations to be used according to the invention include all colorants customary for such purposes. Use may be made both of pigments, of sparing solubility in water, and of dyes, which are soluble in water. Examples that may be mentioned include the colorants known under the designations Rhodamin B, C.I. Pigment Red 112 and C.I. Solvent Red 1. The colorants used can be inorganic pigments, for example iron oxide, titanium oxide, Prussian Blue, and organic dyes, such as alizarin, azo and metal phthalocyanine dyes, and trace nutrients, such as salts of iron, manganese, boron, copper, cobalt, molybdenum and zinc.

Suitable wetting agents that may be present in the seed dressing formulations to be used according to the invention include all substances which promote wetting and are customary in the formulation of agrochemically active compounds. Preference is given to using alkylnaphthalenesulphonates, such as diisopropyl- or diisobutylnaphthalenesulphonates.

Suitable dispersants and/or emulsifiers that may be present in the seed dressing formulations to be used according to the invention include all nonionic, anionic and cationic dispersants which are customary in the formulation of agrochemically active compounds. Preference is given to using nonionic or anionic dispersants or mixtures of nonionic or anionic dispersants. Particularly suitable nonionic dispersants are ethylene oxide/propylene oxide block polymers, alkylphenol polyglycol ethers, and also tristryrylphenol polyglycol ethers and their phosphated or sulphated derivatives. Particularly suitable anionic dispersants are lignosulphonates, polyacrylic acid salts and arylsulphonate/formaldehyde condensates.

Defoamers that may be present in the seed dressing formulations to be used according to the invention include all foam-inhibiting compounds which are customary in the formulation of agrochemically active compounds. Preference is given to using silicone defoamers, magnesium stearate, silicone emulsions, long-chain alcohols, fatty acids and their salts and also organofluorine compounds and mixtures thereof.

Preservatives that may be present in the seed dressing formulations to be used according to the invention include all compounds which can be used for such purposes in agrochemical compositions. By way of example, mention may be made of dichlorophen and benzyl alcohol hemiformal.

Secondary thickeners that may be present in the seed dressing formulations to be used according to the invention include all compounds which can be used for such purposes in agrochemical compositions. Preference is given to cellulose derivatives, acrylic acid derivatives, polysaccharides, such as xanthan gum or Veegum, modified clays, phyllosilicates, such as attapulgite and bentonite, and also finely divided silicic acids.

Suitable adhesives that may be present in the seed dressing formulations to be used according to the invention include all customary binders which can be used in seed dressings. Polyvinylpyrrolidone, polyvinyl acetate, polyvinyl alcohol and tylose may be mentioned as being preferred.

Suitable gibberellins that may be present in the seed dressing formulations to be used according to the invention are preferably the gibberellins A1, A3 (= gibberellic acid), A4 and A7; particular preference is given to using gibberellic acid. The gibberellins are known (cf. R. Wegler "Chemie der Pflanzenschutz- and Schädlingsbekämpfungsmittel" [Chemistry of Crop Protection Agents and Pesticides], Vol. 2, Springer Verlag, 1970, pp. 401-412).

The formulations generally comprise between 0.1 and 95% by weight of active compound, preferably between 0.5 and 90%.

The active compound combinations according to the invention can be present in commercial formulations and in the use forms prepared from these formulations as a mixture with other active compounds, such as insecticides, attractants, sterilants, bactericides, acaricides, nematicides, fungicides, growth regulators or herbicides. A mixture with fertilizers is also possible.

The treatment according to the invention of the plants and plant parts with the active compound combinations or compositions is carried out directly or by action on their surroundings, habitat or storage space using customary treatment methods, for example by dipping, spraying, atomizing, irrigating, evaporating, dusting, fogging, broadcasting, foaming, painting, spreading-on, watering (drenching), drip irrigating and, in the case of propagation material, in particular in the case of seeds, furthermore as a powder for dry seed treatment, a solution for seed treatment, a water-soluble powder for slurry treatment, by incrusting, by coating with one or more coats, etc. Preference is given to application by dipping, spraying, atomizing, irrigating, evaporating, dusting, fogging, broadcasting, foaming, painting, spreading-on, watering (drenching) and drip irrigating.

The application of the formulations is carried out in accordance with customary agricultural practice in a manner adapted to the application forms. Customary applications are, for example, dilution with water and spraying of the resulting spray liquor, application after dilution with oil, direct application without dilution, seed dressing or soil application of carrier granules.

The active compound content of the application forms prepared from the commercial formulations can vary within wide limits. The active compound concentration of the application forms can be from 0.0000001 up to 95% by weight of active compound, preferably between 0.0001 and 2% by weight.

The compositions according to the invention do not only comprise ready-to-use compositions which can be applied with suitable apparatus to the plant or the seed, but also commercial concentrates which have to be diluted with water prior to use.

The invention is illustrated by - but not limited to - the examples below.

### Example A. Gene Expression Profiling Experiments

Gene expression profiling experiments were performed using an Affymetrix array of the rice whole genome under two conditions, with and without pathogen challenge. Without pathogen pressure, three weeks-old rice seedlings were drenched in an Isotianil solution (20 mg/ml, at a dose range corresponding to agronomical practices) and the gene expression profile was studied at two time points. Mock treated plants were used as control. A t-test analysis using 2 fold threshold increase or decrease in gene expression (P<0.001), identified 5 Isotianil-responsive genes at one day post-treatment (dpt) and 15 more at four dpt. This first analysis indicates that only very few genes are directly responsive to Isotianil itself. All these genes are up regulated and most of them are involved in defense responses. The first group of interesting genes codes for transcription factors involved in SA pathway. Up regulation of a *NPR1* homolog gene, called *NPR3* (or *NH3)* was observed that is induced by 6 fold. *OsWRKY45,* another key regulator of induced resistance, is induced by 2.9 fold (P<0.0017). Other transcription factors implicated in SA pathway are also up regulated: *OsWRKY62, OsWRKY76* with a fold change of 18 and 6.5 respectively. The second group of interesting genes is involved in SA catabolism such as *OsSGT1* coding for a SA glucosyltransferase, 13.4 fold induction, and *OsBMST1* coding for a salicylate methyltransferase, 7.1 fold induction (Table 2).

**Table 2. Induction of expression of genes involved in SA/JA signaling pathways. Up regulated genes 4 days post treatment with Isotianil or Probenazole. Fold induction compared to control.**

| | **Isotianil 96 hpt** | **Probenazole 96 hpt** |
|---|---|---|
| NPR1 homolog (Os03g0667100) | 6.1 | 2.6 |
| NPR1 homolog | 4.1 | 2.3 |
| NPR1 homolog | 2.9 | 1.9 |
| NPR1 homolog | 2.5 | 1.8 |
| WRKY 45 | 2.9 | 2.7 |
| OsWRKY50 | 5.9 | 1.99 |
| OsWRKY62 | 18.5 | 3.1 |
| OsWRKY65 | 3.2 | 1.6 |
| OsWRKY76 | 6.6 | 1.4 |
| SA:OsSGT1 (BCS) Os09g0518000 UDP-Glucosyl-transferase | 13.4 | 3.0 |
| SA : OsSGT1 Umemura | 4.5 | 1.8 |
| SA catabolism :methyl transferase | 7.1 | 2.5 |
| JA: OsLOX2-2 | 2.8 | 1.9 |
| Jacalin (Publication Kato Tanabe 2009 - AK066682.1) | 25.9 | 4.4 |
| Terpene synthase/cyclase family protein | 26.8 | 5.9 |
| Terpene synthase/cyclase family protein | 47.1 | 13.0 |

In order to investigate whether Isotianil affects gene expression upon infection, Isotianil and mock treated three weeks-old rice seedlings were challenged by fungal infection with *P. oryzae* four days post-treatment. Gene expression was analyzed over two time points: 1 and 2 days post-inoculation (dpi). The same statistical test as described above was used to select differentially regulated genes. Results show that the number of differentially expressed genes in infected mock treated plants, that are susceptible, is very low at these time points.

In contrast, in infected Isotianil primed plants, that are resistant to fungal blast disease, variation in gene expression is observed as early as 1 dpi and then strongly increases at 2 dpi. Since the highest difference in gene expression between susceptible and resistant rice is observed at 2 dpi, the analysis was first focused on this time point. At 2 dpi, in Isotianil primed plants, with a cut off set above 2, a total of 481 genes are differentially expressed in response to infection, most of them being up regulated. Thirteen percent of these genes are also induced in non infected Isotianil primed plants at the same time point (data not shown). Therefore, 87% of the differentially expressed genes are specifically due to Isotianil treatment upon infection. These differentially expressed genes are implicated in diverse cellular functions and most of them are related to responses to stress and defense responses. Indeed typical markers of SAR have been identified. A set of 17 *PR* genes is up regulated, including *PR1a, PBZ, PR* genes involved in antifungal activities such as chitinase and beta-glucanase (Table 3).

**Table 3. Differential expression of genes in Isotianil primed and mock treated plants, inoculated with P. oryzae 4 days after treatment, gene expression measured 2 days after inoculation (2 dpi). The list includes part of genes up regulated by at least a factor 2 (P < 0.001).**

| **Locus ID** | **Annotation** | **Fold change in Isotianil primed plants** | **Fold change in mock treated plants** |
|---|---|---|---|
| **Defense response : Pathogenesis Related proteins** | | | |
| Os07g03730.1 | PR1a like | 5.4 | 2.6 |
| Os01g51570.1 | PR2 / beta glucanase | 3.1 | 1.4 |
| Os01g47070.1 | PR3 /acidic chitinase | 16.9 | 6.4 |
| Os03g04060.1 | PR3 /basic chitinase | 4.2 | 1.5 |
| Os12g36880.1 | PBZ / PR10a | 19.9 | 4.0 |
| **Secondary metabolism: phenylpropanoids, flavonoids** | | | |
| Os02g41670.1 | Phenylalanine ammonia-lyase (PAL1) | 5.44 | 1.55 |
| Os11g32650.1 | Chalcone synthase (CHS) | 3.68 | 1.41 |
| Os11g02440.2 | Chalcone isomerase | 5.78 | 1.53 |
| **Transcription factors** | | | |
| Os03g46440.1 | NPR1 homolog (NPR3) | 6.64 | 1.04 |
| Os05g25770.1 | OsWRKY45 (class III) | 9.4 | 1.5 |
| Os09g25070.1 | OsWRKY62 (class II) | 18.5 | 1.06 |
| Os05g39720.1 | OsWRKY70 (classI) | 3.7 | 1.77 |
| **SA catabolism** | | | |
| Os09g34230.1 | UDP-glucosyl transferase family protein (OsSGT1) | 65.66 | 1.4 |
| Os09g34250.1 | UDP-glucosyl transferase family protein (OsSGT1) | 12.4 | 0.84 |

Expression of these PR genes is increased in comparison with non-treated plants. Some display a stronger induction while for other genes induction occurs only upon priming. Defense associated cellular processes were also studied such as the expression level of phenylalanine ammonia-lyase (PAL)-encoding genes, a key enzyme in the phenylpropanoid pathways leading to defense related secondary metabolites (e.g. phytoalexins, lignin like polymers); of chalcone synthase and of chalcone isomerase, two genes involved in the phytoalexins biosynthetic pathway. These 3 genes are activated in Isotianil primed plants while no activation is observed in non treated plants (Table 3).

Taken together these results indicate that Isotianil treated plants are potentiated for defense responses. Since transcription factors such as those belonging to *WRKY* classes and *NRP1* are critical for expression of defense related genes, we also studied their expression at 2 dpi. Similarly to Isotianil treatment in the absence of infection, *NPR1* homolog gene (*NPR3*) and *OsWRK45* are up regulated as well as *OsWRK62* (Table 3). Additional *WRKY* genes are also up regulated, including *OsWRK70.* These genes encoding transcription factor are not activated in non-treated plants. Finally *OsSGT1* (*Os09g34230*), already induced in absence of pathogen, and its close homolog *Os09g34250* are induced by a factor of 65 and 12 respectively.

These first results show that Isotianil, applied at dose range used in agronomical conditions and without pathogen pressure, induces only few changes in gene expression. Nevertheless, upon pathogen challenge, it primes rice plants for an increased defense genes activation compared to simple infection.

Thus Isotianil represents a novel type of defense inducer that works by priming plant's intrinsic disease resistance mechanisms. According to these first results, Isotianil mode of action would involve the SA pathway. Indeed, *OsWRKY45, OsWRKY62, OsWRKY70* and *OsWRKY76,* which are activated by SA and by incompatible interaction between *P. oryzae* and rice (Y. Song, A. C-R., S.-J. Jing, Y. D-Q., in Rice Science. (2010), vol. 17, pp. 60-72 H.-S. Ryu et al., in Plant Cell Rep. (2006), vol. 25, pp. 836-847), are also strongly induced in Isotianil primed plants. Another putative key component of the SA pathway in rice, *NPR1* homolog gene (*NPR3*) is also induced by Isotianil. A recent study pointed up the possible direct involvement of *NPR3* in defense (W. Bai et al., in Plant Biotechnol. J. (2010) pp. 1-11). In addition, Isotianil induced resistance would directly involve SA catabolism by strongly activating *OsSGT1*. Its activation would probably lead to increased SAG production that is believed to be more than a reservoir for free SA in rice. The observed activation of *OsBMST1* would lead to MeSA, that was reported, in tobacco, to be the systemic signal of SAR (J. Shah, in Curr. Opin. Plant Biol. (2009), vol. 12, pp. 459-464), would be also important for induced resistance. Isotianil-primed plants also display a potentiated SAR response upon infection, including enhanced activation of PR genes and of genes involved in secondary metabolisms such as phenylpropanoid and flavonoid pathways. Finally, Isotianil induces up regulation of key players involved in signal transduction that were suggested to be part of the priming phenomenon that also occurs in induced resistance.

### Example B

**Table 4. Number of differentially expressed genes (down- or up regulated by at least a factor of 2) during time course of fungal infection with Pyricularia in Isotianil primed 3 weeks-old rice seedlings compared to mock treated and Probenazole treated seedlings. hpi: hours post-inoculation, p< 0.001**

| | **24 hpi** | | **48 hpi** | | **96 hpi** | |
|---|---|---|---|---|---|---|
| | **up** | **down** | **up** | **down** | **up** | **down** |
| **Mock treated** | 10 | / | 9 | 1 | 1116 | 532 |
| **Isotianil treated** | 71 | 3 | 437 | 44 | 1571 | 304 |
| **Probenazole treated** | 23 | 3 | 105 | 55 | 1186 | 184 |

The genes down-regulated at 24 hpi were identified as (see table 5):

**Table 5: Genes down-regulated 24 hpi after pre-treatment with Isotianil or Probenazole**

| **TIGR5 ID name** | | **Remark** |
|---|---|---|
| **Isotianil** | | |
| LOC_Os04g59200.1 | peroxidase | Publication Kato Tanabe 2009 - Mg Infection -AK067667.1 |
| LOC_Os04g40990.1 | malate synthase | |
| not identified | | |
| **Probenazole** | | |
| LOC_Os10g40600.1 | nitrate transporter | |
| LOC_Os12g40470.1 | | |
| not identified | | |

### Example C

**Table 6. Expression pattern of defense genes during infection with Magnaporthe grisea in control plants and in plants pre-treated with Isotianil or Probenazole**

| | | **Fold change at 24 hpi** | | | **Fold change at 48 hpi** | | |
|---|---|---|---|---|---|---|---|
| **Locus ID** | **Annotation** | **mock treated plants** | **Isotianil primed plants** | **PBZ primed plants** | **mock treated plants** | **Isotianil primed plants** | **PBZ primed plants** |
| **Transcription factors** | | | | | | | |
| LOC_Os03g46440.1 | NPR1 homolog | 1,58 | 16,01 | 4,77 | 0,95 | 10,45 | 4,96 |
| LOC_Os01g09800.1 | NH1 | 0,94 | 0,88 | 1,06 | 1,48 | 2,04 | 1,30 |
| LOC_Os05g25770.1 | OsWRKY45 | 1,34 | 5,53 | 2,87 | 1,54 | 9,39 | 5,61 |
| LOC_Os09g25070.1 | OsWRKY62 | 2,23 | 19,32 | 2,91 | 1,06 | 18,56 | 4,34 |
| LOC_Os09g25060.1 | OsWRKY76 | 1,71 | 15,89 | 1,99 | 1,02 | 7,58 | 2,71 |
| **SA catabolism** | | | | | | | |
| LOC_Os09g34230.1 | SA : OsSGT1 | 2,03 | 17,47 | 4,85 | 1,40 | 65,66 | 9,50 |
| LOC_Os09g34250.1 | SA: OsSGT1 | 1,26 | 6,69 | 1,93 | 0,84 | 12,42 | 1,80 |
| **Secondary metabolism: phenylpropanoids, flavonoids** | | | | | | | |
| LOC_Os12g36880.1 | PR10a /PBZ inducible | 1,10 | 0,69 | 0,74 | 3,99 | 19,85 | 10,58 |
| LOC_Os12g36850.1 | PR10 /Betv I related prot | 1,74 | 1,44 | 2,04 | 16,93 | 77,35 | 46,77 |
| LOC_Os01g71340.1 | PR2 / beta glucanase | 1,45 | 1,40 | 1,67 | 2,85 | 5,98 | 4,69 |
| LOC_Os06g51060.1 | PR3 /basic chitinase | 1,48 | 1,20 | 1,15 | 1,13 | 2,59 | 1,58 |
| **Defense response : Pathogenesis Related proteins** | | | | | | | |
| LOC_Os02g41670.1 | PAL | 1,17 | 1,35 | 1,24 | 1,55 | 5,44 | 2,00 |
| LOC_Os02g41680.1 | PAL | 1,01 | 1,74 | 1,02 | 2,06 | 6,64 | 1,93 |
| LOC_Os11g02440.2 | Chalcone isomerase | 1,57 | 2,47 | 1,55 | 1,53 | 5,77 | 2,55 |
| LOC_Os11g32650.1 | CHS Chalcone synthase | 1,14 | 2,96 | 1,99 | 1,41 | 3,68 | 2,22 |

### Example D

**Real-time quantitative PCR.** Three week old seedlings are treated with Isotianil, Probenazole, or Tiadinil by drenching (20 mg/L in 1% acetone, 0.1 % Tween20 solution). Samples (a, b) are harvested for the qPCR analysis at 4 days post-treatment (dpt). Mock treated plants are used as control. Four days after treatment rice seedlings are inoculated with *Pyricularia grisea* (40 000 spores/mL). Samples (c) are harvested at 2 days post-inoculation (dpi) and subjected to qPCR analysis. At the same time points, samples from simple infection (e) as well as controls (d) and (f) are also investigated. All the experiments are performed in triplicates. In parallel, disease resistance against fungal blast is evaluated 7 dpi, by measuring disease severity (chlorotic regions) in comparison with mock treated plants.

The chemical effect of a higher dose (50 ppm) on defense gene expression is also investigated at 4 days post-treatment. For this, three week old seedlings are treated with Isotianil, Probenazole, or Tiadinil by drenching (50 mg/L in 1% acetone, 0.1% Tween20 solution). Samples are harvested for qPCR experiment at 4 days post-treatment (dpt). Mock treated plants are used as control.

The expression of 22 defense related genes is monitored by qPCR for each experimental condition.

### Example E

**Experimental procedure.** Three week old seedlings are treated with Isotianil by drenching (20 mg/L in 1% acetone, 0.1 % Tween20 solution). Samples (a, b) are harvested for microarray analysis at 1 and 4 days post-treatment (dpt). Mock treated plants are used as control. After four days of treatment, rice seedlings are inoculated with *Pyricularia grisea* (40 000 spores/mL). Samples (c) are harvested at 1 and 2 days post-inoculation (dpi) and subjected to microarray analysis. At the same time points, samples from simple infection (e) as well as controls (d) and (f) are also investigated. All the experiments are performed in triplicates. In parallel, disease resistance against fungal blast was evaluated 7 dpi, by measuring disease severity (chlorotic regions) in comparison with mock treated plants. Isotianil showed efficiency of up to 85% at a dose of 2.5 mg/L in these experimental conditions (Fig. 4).

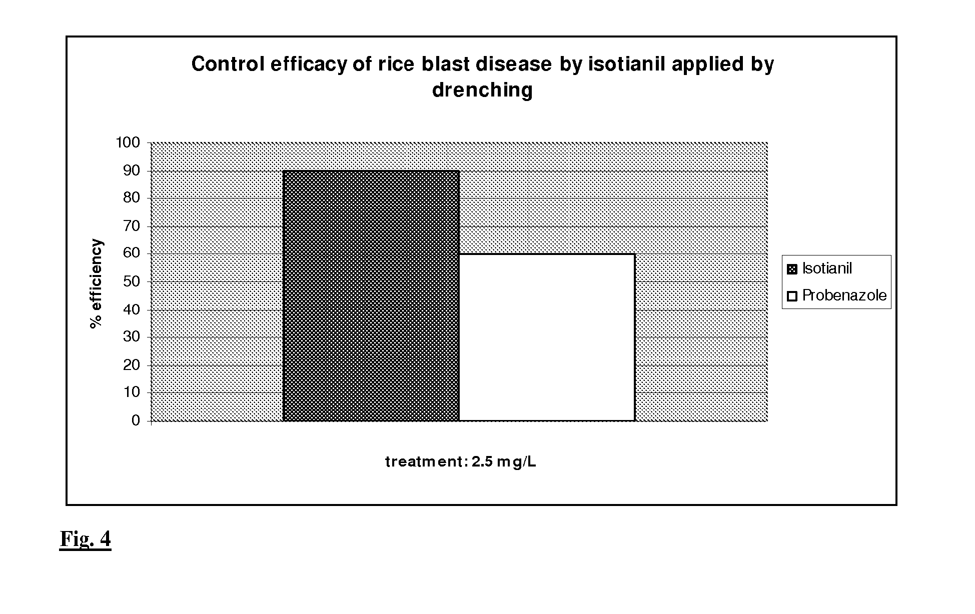

## Claims

1. Use of an isothiazolecarboxamide of the formula (I) 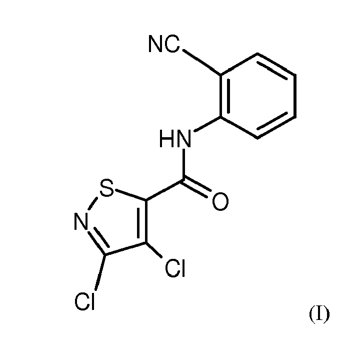 or a thiadiazolecarboxamide of the formula (II) 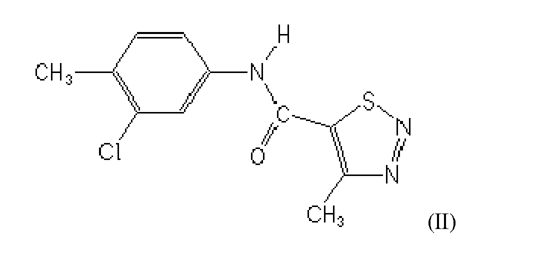 for inducing latent host defenses in a plant.

2. Use according to claim 1, wherein the latent host defenses are activated in the event of an attack by a phytopathogenic pathogen or pest.

3. Use according to claim 1 or 2, wherein the latent host defenses in a plant are activated in the event of abiotic stress.

4. Use according to any of claims 1 to 3, wherein the inducing of latent host defenses in a plant comprises the priming of the intrinsic disease resistance mechanisms of a plant.

5. Use according to any of claims 1 to 4, wherein the inducing of latent host defenses in a plant maintains the strong growth and vitality of the plant.

6. Use according to any of claims 1 to 5, wherein the inducing of latent host defenses in a plant results in a stronger and faster induction of the expression of plant defense genes in the event of an attack by a phytopathogenic pathogen or pest or of abiotic stress, as compared to control or other plant defense inducers.

7. Use according to any of claims 1 to 6, wherein the plant defense genes induced in the event of an attack by a phytopathogenic pathogen or pest are expressed at least two fold stronger as compared to control.

8. Use according to claim 7, wherein the at least two fold stronger expression of plant defense genes can be observed 24 or 48 hours, preferably 24 hours, after an attack by a phytopathogenic pathogen or pest .

9. Use according to any of claims 1 to 8, wherein the plant defense genes induced in the event of an attack by a phytopathogenic pathogen or pest or of abiotic stress comprise genes of the SAR responses including enhanced expression of transcription factors such as NPR1 homolog and WRKY and of proteins of SA catabolism such as SGT1.

10. Use according to any of claims 1 to 9, wherein the compound of formula (I) or formula (II) is used in combination with at least one further agrochemically active compound.

11. Use according to any of claims 1 to 10, wherein the compound of formula (I) or formula (II) is used in combination with at least one fertilizer compound.

12. Use according to any of claims 1 to 11, wherein the compound of formula (I) is used.

13. Use according to any of claims 1 to 12, wherein the phytopathogenic pathogen or pest is selected from the group consisting of phytopathogenic fungi, bacteria, viruses, viroids, mycoplasma-like organisms, protozoa, insects, acari, and nematodes.

14. Use according to claim 13, wherein the phytopathogenic pathogen or pest is selected from phytopathogenic fungi, bacteria, and insects.

15. Use according to any of claims 1 to 14, wherein the plant is rice, banana, wheat, cucumber, or tea.

16. Use according to any of claims 1 to 15, wherein the plant is a transgenic plant.
